# EUROPÄISCHE PATENTANMELDUNG

(11) **EP 2 463 317 A1**
(43) Veröffentlichungstag der Anmeldung: **13.06.2012**
(21) Anmeldenummer: 10194368.6
(22) Anmeldetag: 09.12.2010
(51) Int. Cl.: C08F 220/34, C08F 220/60, C08F 226/04, C04B 24/26

(54) **Additiv für fließmittel enthaltende Baustoffmischungen**

(71) Anmelder: BASF Construction Polymers GmbH, 83308 Trostberg (DE)
(72) Erfinder: Schinabeck, Michael, 83352 Altenmarkt (DE)

(57) **Zusammenfassung**

Beansprucht wird ein kationisches Copolymer sowie dessen Verwendung als Zusatzmittel für Baustoffsysteme, insbesondere basierend auf Calciumsulfat. Die erfindungsgemäßen Copolymere bewirken ein beschleunigtes Abbindeverhalten sowohl in tonhaltigen als auch nicht tonhaltigen Gipsen und sie ermöglichen ein uneingeschränktes Wasserreduktionsvermögen von gleichzeitig mit den Copolymeren eingesetzten Dispergiermitteln. Die im Gipssystem enthaltenen Tonanteile werden vom kationischen Copolymer maskiert, so dass die Baustoffmischung Eigenschaften einer nicht tonhaltigen Baustoffmischung aufweist. Dabei werden die Copolymere als Formulierung, auch gemeinsam mit Verzögerern eingesetzt.

## Beschreibung

Die vorliegende Erfindung betrifft ein neues Copolymer und dessen Verwendung als Zusatzmittel für Baustoffsysteme.

Es ist bekannt, dass man anorganischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere gezielt bei der Herstellung von Baustoffmischungen, die hydraulische Bindemittel wie Zement oder Kalk oder andere Bindemittel auf Calciumsulfat-Basis enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Baukörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Wie beispielsweise aus der WO 2005 / 075529 hervorgeht, werden als derartige Mittel in der Praxis insbesondere Copolymere eingesetzt, welche durch radikalische Copolymerisation von Säuremonomeren mit Polyethermakromonomeren hergestellt werden (Polycarboxylatether basierende Fließmittel).

Nicht selten werden in Baustoffrezepturen zusammen mit dem anorganischen Bindemittel Zuschläge eingesetzt, welche einen höheren adsorptiven Anteil aufweisen. Mit "adsorptiven Anteil eines Zuschlags" sind solche Partikel des Zuschlags gemeint, welche insbesondere eine hohe Oberfläche und/oder große Porosität aufweisen und/ oder als Tonmineral vorliegen und deren Oberflächen für Polycarboxylatether basierende Fließmittel attraktiv sind. Somit findet eine starke Wechselwirkung der Polycarboxylatether basierenden Fließmittel mit den adsorptiven Zuschlägen statt bzw. die Polycarboxylatether basierenden Fließmittel werden in die Poren der adsorptiven Zuschläge irreversibel eingelagert, so dass die Fließmittelmoleküle für die Dispergierwirkung der Partikel des anorganischen Bindemittels, insbesondere der Zement- oder Gipspartikel nicht mehr zur Verfügung stehen. Daraus folgt letztendlich, dass die Wirkung des Polycarboxylatether basierenden Fließmittels in unerwünschter Weise stark herabgesetzt wird, wodurch die Verarbeitbarkeit der Baustoffrezeptur bzw. die mechanische Qualität der ausgehärteten Baustoffrezeptur negativ beeinträchtigt wird.

Bei der Verwendung tonhaltiger Gipsvarianten und vor allem bei Naturgips ist zu beobachten, dass erhebliche Mengen des eingesetzten Dispergiermittels (Fließmittels) ähnlich den adsorptiven Anteilen eines Zuschlages vom Tonmineral adsorbiert bzw. absorbiert werden, weshalb sie nicht mehr zur Verflüssigung des Gipshalbhydrats in der Gipsmasse zur Verfügung stehen.

Zur Lösung dieses Problems wurde versucht, so genannte Opfersubstanzen einzusetzen, die in Konkurrenz zum Dispergiermittel stärker an die Oberfläche der Tonpartikel binden und diese auf diese Weise entweder maskieren, so dass sie für das Dispergiermittel nicht mehr zugänglich sind, oder die Tonpartikel weitgehend flokkulieren.

In US 6,352,952 B1 sind wässrige Zementzusammensetzungen beschrieben, die als Superverflüssiger EO/PO-Gruppen-haltige Kammpolymere enthalten und darüber hinaus Tone vom Smectit-Typ. Ferner ist angegeben, dass die Tonanteile in der Lage sind, den Verflüssiger unter Quellung zu absorbieren. Um diese Absorption zu verhindern werden anorganische Kationen, organische Kationen, polare organische Moleküle oder tonspezifische Dispergiermittel eingesetzt. Genannt sind insbesondere Phosphate, Poly(meth)acrylate und Gluconate. Derartige Systeme können allerdings in Gipshaltigen Massen nicht eingesetzt werden, da sie deren Abbinden zu sehr verzögern.

US 7,261,772 B1 beschreibt eine Gipszusammensetzung, die neben Wasser, Gips und Ton auch ein Polyoxyalkylen, eine Aminverbindung und ein Kammcopolymer enthält. Unter das Kammcopolymer fallen sich wiederholende Einheiten von Polyethermacromonomeren und Acrylmonomeren, also im weiteren Sinne Polycarboxylatether. Zwingend erforderlich ist die Anwesenheit der Aminkomponente. Nachteilig daran ist allerdings, dass flüchtige Amine bei erhöhten Temperaturen, wie sie typischerweise beim Trocknen von Gipskartonplatten eingesetzt werden, zu einer starken Geruchsbelästigung tendieren. Amine als Ton-modifizierende Komponente kommen deshalb für Gipssysteme nur bedingt in Frage.

Polycarboxylatether führen im Allgemeinen zu einem verzögerten Abbindeverhalten von gipsbasierenden Bindemitteln, insbesondere bei höheren Dosierungen. Ein weiteres Problem bei der Verwendung von Dispergiermitteln für Naturgipse stellt deren Verunreinigung mit Ton dar, welcher das Wasserreduktionsvermögen von Dispergiermitteln stark herabsetzt bzw. eliminiert.

Aufgabe der vorliegenden Erfindung war es, ein neues polymeres Additiv für Baustoffmischungen bereitzustellen, welche nach Zugabe von nur verhältnismäßig wenig Anmachwasser eine gut verarbeitbare Baustoffrezeptur in Form einer Gips-Slurry ergibt, die nach Aushärtung gute mechanische Eigenschaften aufweist und zwar insbesondere auch dann, wenn die Gipse einen höheren adsorptiven Anteil, bpw. in Form von Tonen aufweisen.

Die Lösung dieser Aufgabe ist ein Copolymer enthaltend
a) 5 bis 95 Mol-% einer kationischen Struktureinheit (A)
b) 5 bis 55 Mol-% einer makromonomeren Struktureinheit (B), und
c) 0 bis 80 Mol-% einer Struktureinheit (C)
d) 0 bis 80 Mol-% ein von der Struktureinheit (C) verschiedenen Struktureinheit (D)
   wobei die Struktureinheit (A) mindestens eine Einheit der folgenden allgemeinen Formeln (I) und/oder (II) aufweist: 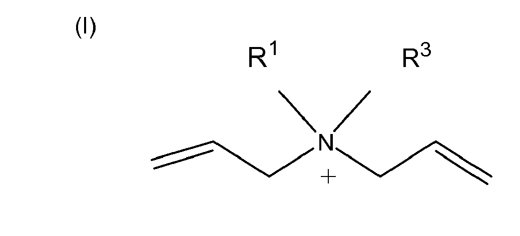 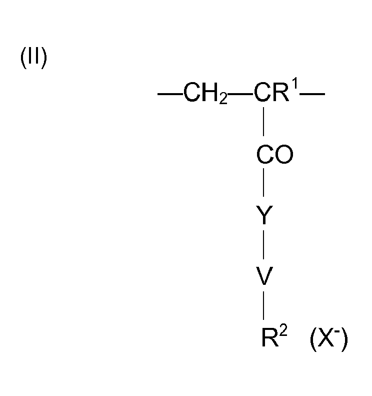 worin
   R¹ gleich oder verschieden ist und für Wasserstoff und/oder einen Methylrest steht, 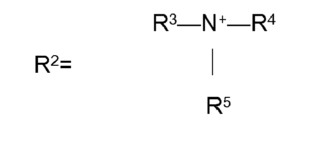 R³, R⁴ und R⁵ jeweils gleich oder verschieden sind und unabhängig voneinander jeweils durch Wasserstoff, einen aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen oder Polyethylenglykol (PEG), repräsentiert werden,
   Y gleich oder verschieden ist und durch Sauerstoff, -NH und/oder -NR³, repräsentiert wird,
   V gleich oder verschieden ist und durch -(CH₂)ₓ-, 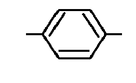 , und/oder 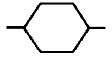
, repräsentiert wird, mit
x gleich oder verschieden ist und durch eine ganze Zahl von 1 bis 6 repräsentiert wird,
X gleich oder verschieden ist und durch ein Halogenatom, C₁- bis C₄-Alkylsulfat und/oder C₁- bis C₄-Alkylsulfonat, repräsentiert wird.

Bei dem die Erfindung betreffenden Copolymer handelt es sich im Wesentlichen um ein kationisches Kammpolymer, welches keine verzögernden Eigenschaften sowohl in tonhaltigen als auch in nicht tonhaltigen Gipsen zeigt und eine mögliche Beschleunigung des Abbindeverhaltens nicht negativ beeinflusst. Weiterhin ermöglicht das kationische Kammpolymer ein uneingeschränktes Wasserreduktionsvermögen eines in Kombination mit dem kationischen Kammpolymer eingesetzten Dispergiermittels insbesondere in tonhaltigem Gips. Der im Gips enthaltende Ton wird vom kationischen Polymer maskiert, so dass die Baustoffmischung Eigenschaften einer nicht tonhaltigen Baustoffmischung aufweist.

Der Ausdruck "CaSO₄ basiert" bedeutet im vorliegenden Zusammenhang Calciumsulfat in seinen wasserfreien und Hydrat-Formen, wie z. B. Gips, Anhydrit, Calciumsulfatdihydrat und Calciumsulfathemihydrat.

Der Ausdruck "Gips" wird im vorliegenden Zusammenhang synonym mit Calciumsulfat verwendet, wobei das Calciumsulfat in seinen unterschiedlichen wasserfreien und hydratisierten Formen mit und ohne Kristallwasser vorliegen kann. Natürlicher Gips umfasst im Wesentlichen Calciumsulfat-Dihydrat. Die natürliche kristallwasserfreie Form von Calciumsulfat ist vom Ausdruck "Anhydrit" umfasst. Neben den natürlichen Erscheinungsformen stellt Calciumsulfat ein typisches Nebenprodukt technischer Prozesse dar, worunter dann "synthetischer Gips" verstanden wird. Ein typisches Beispiel für einen synthetischen Gips aus technischen Prozessen ist die Abgasentschwefelung. Synthetischer Gips kann aber auch gleichermaßen das Nebenprodukt von Phosphorsäure- oder Flusssäure-Hestellungsverfahren sein, wobei in diesen Fällen Halbhydratformen wie z. B. CaSO₄ x 1/2 H₂O entsteht. Typischer Gips (CaSO₄ x 2 H₂O) kann calziniert werden, indem das Hydratationswasser abgetrennt wird. Typische Produkte der unterschiedlichsten Calzinierungsverfahren sind α- oder β-Halbhydrat. β-Calciumsulfathalbhydrat resultiert aus einer raschen Erhitzung in offenen Gefäßen, bei einer gleichzeitig schnellen Verdampfung von Wasser unter Bildung von Hohlräumen. α-Halbhydrat wird hergestellt durch die Entwässerung von Gips in geschlossen Autoklaven. Die Kristallform in diesem Fall ist relativ dicht, weshalb dieses Bindemittel weniger Wasserbedarf benötigt als β-Halbhydrat. Auf der anderen Seite rehydriert Gipshalbhydrat mit Wasser zu Dihydrat-Kristallen. Üblicherweise ist für die vollständige Hydratation von Gips ein Zeitbedarf von einigen Minuten bis Stunden notwendig, woraus eine verkürzte Verarbeitungszeit im Vergleich zu Zementen resultiert, die zur vollständigen Hydratation mehrere Stunden bis Tage benötigen. Diese Eigenschaften machen Gips zu einer brauchbaren Alternative zu Zementen als Bindemittel in den verschiedensten Anwendungsgebieten. Außerdem zeigen ausgehärtete Gipsprodukte eine ausgeprägte Härte und Druckfestigkeit.

Calciumsulfathemihydrat bildet mindestens zwei Kristallformen aus, wobei α-calzinierter Gips üblicherweise in geschlossenen Autoklaven entwässert wird. Für die unterschiedlichsten Anwendungsgebiete wird β-calzinierter Gips ausgewählt, weil dieser besser verfügbar ist, und unter wirtschaftlichen Gesichtspunkten zahlreiche Vorteile zeigt. Allerdings werden diese Vorteile dadurch zum Teil wieder aufgehoben, dass β-calzinierter Gips zur Verarbeitung einen höheren Wasserbedarf erfordert, um überhaupt fließfähige Slurrys zu erzielen. Zudem neigen getrocknete Gipsprodukte zu einer gewissen Schwäche, welche auf Restwassermengen zurückzuführen sind, die in der Kristallmatrix beim Aushärten verblieben sind. Aus diesem Grund zeigen entsprechende Produkte eine geringere Härte als Gipsprodukte, die mit geringeren Mengen an Anmachwasser zubereitet worden sind.

Insgesamt kann die Verarbeitung von Gips durch die Zugabe von Fließmitteln positiv beeinflusst werden.

Gemäß vorliegender Erfindung handelt es sich bei der Struktureinheit (A) um bevorzugt das Polymerisationsprodukt ausgewählt aus der Reihe mindestens einer Monomerspezies [2-(Acryloyloxy)-ethyl]-trimethyl- ammoniumchlorid, [2-(Acryloylamino)-ethyl]-trimethyl-ammoniumchlorid, [2-(Acryloyloxy)-ethyl]-trimethyl-ammoniummethosulfat, [2-(Methacryloyloxy)-ethyl]-trimethylammonium-chlorid bzw. -methosulfat, [3-(Acryloylamino)-propyl]-trimethylammoniumchlorid, [3-(Methacryloylamino)-propyl]-trimethylammoniumchlorid und/oder Diallyldimethylammoniumchlorid (DADMAC).

Die makromonomere Struktureinheit (B) wird vorzugsweise durch die allgemeinen Formeln (IIIa) und/oder (IIIb) im Polymer repräsentiert: 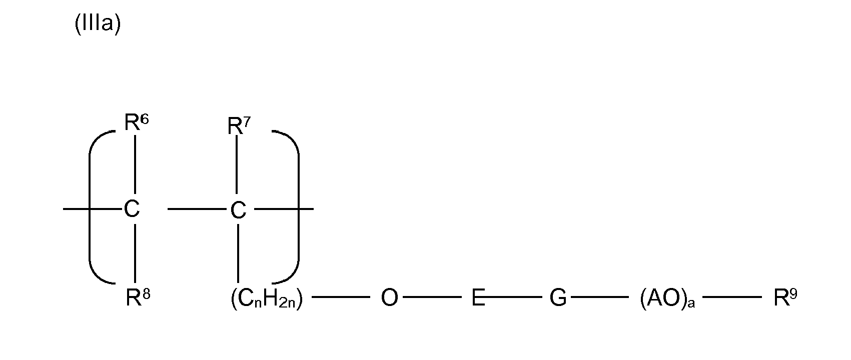 mit
R⁶, R⁷ sowie R⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 5 bis 350 (bevorzugt 10 - 200);
R⁹ gleich oder verschieden sowie repräsentiert durch H, eine unverzweigte oder verzweigte C₁ - C₄ Alkylgruppe, CO-NH₂, und/oder COCH₃; 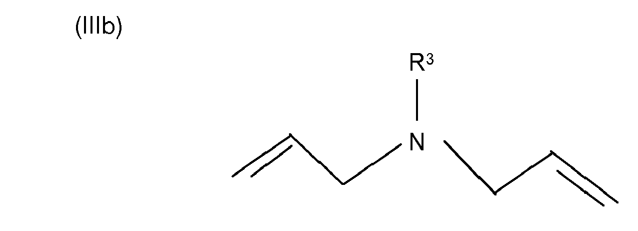 wobei R³ die vorstehend genannte Bedeutung besitzt, und im Falle PEG dieses 5 bis 350, bevorzugt 10 bis 200 Ethylenoxydeinheiten aufweist.

Alternativ kann die Struktureinheit (B) aber auch durch die allgemeine Formel (IV) repräsentiert sein: 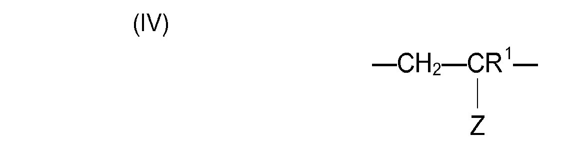 worin
Z gleich oder verschieden ist und -COO(CₘH₂ₘO)ₙ-R¹⁰ bedeutet, mit
R¹⁰ gleich oder verschieden ist und für H und/oder C₁- bis C₄-Alkyl steht, wobei
R¹ die vorstehend genannte Bedeutung besitzt, und
m = 2, 3, 4 oder 5, bevorzugt 2,
n = 0 bis 350 bevorzugt 10 bis 200.

Insgesamt hat es sich als vorteilhaft erwiesen, wenn die Struktureinheit (B) mindestens einen Vertreter einer Monomerspezies ausgewählt aus der Reihe Allylpolyethylenglykol-, Methylpolyethylenglykol-monovinylether, Isoprenylpolyethylenglycol, Polyethylenglykol-vinyloxy-butylether, Polyethylenglykol-block-propylenglykol-vinyloxy-butylether, Methylpolyethylenglykol-block-propylenglykolallylether, Polyethylenglykol--methacrylat und/oder Methylpolyethylenglykol-block-propylenglykolallylether darstellt.

Bei der Struktureinheit (C) kann es sich erfindungsgemäß um das Polymerisationsprodukt mindestens einer Monomerspezies ausgewählt aus Vertretern mit den folgenden allgemeinen Formeln (Va) und/oder (Vb) und/oder (Vc) handeln, wobei 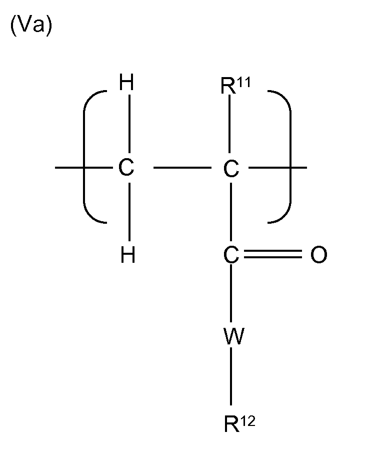 mit
mit R¹¹ gleich oder verschieden sowie repräsentiert durch H und/oder eine unverzweigte oder verzweigte C₁ - C₄ Gruppe;
W gleich oder verschieden sowie repräsentiert durch O und/oder NH;
R¹² gleich oder verschieden sowie repräsentiert durch eine verzweigte oder unverzweigte C₁ - C₅-Monohydroxyalkylgruppe; und 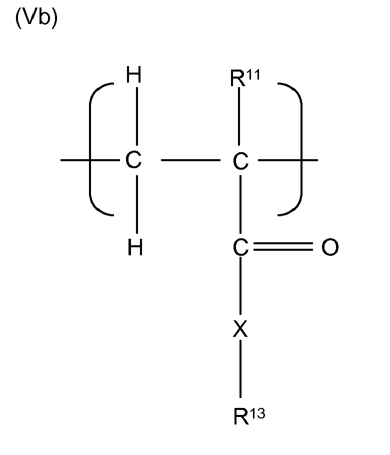 mit
R¹¹ mit den genannten Bedeutungen
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R¹³ gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R¹³ durch OH repräsentiert wird; 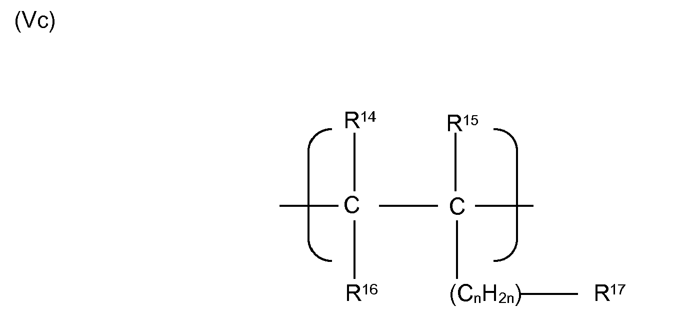 mit R¹⁴, R¹⁵ und R¹⁶ jeweils gleich oder verschieden sowie jeweils unabhängig repräsentiert durch H und/oder eine unverzweigte oder verzweigte C₁ - C₄ Alkylgruppe;
n gleich oder verschieden sowie repräsentiert durch 0, 1, 2, 3 und/oder 4;
R¹⁷ gleich oder verschieden sowie repräsentiert durch (C₆H₅), OH und/oder -COCH₃. Copolymer nach einem der Ansprüche 1 bis 6, dadurch gekennzeichnet, dass es zusätzlich eine Struktureinheit (D) enthält, die durch die folgende allgemeine Formel (VI) repräsentiert wird: 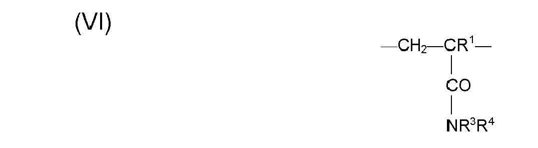 worin R¹, R³ und R⁴ jeweils die vorstehend genannten Bedeutungen haben, oder Diallylamin-Polyethylenglykol bedeutet.

Copolymer nach einem der Ansprüche 1 bis 7, dadurch gekennzeichnet, dass die Struktureinheit (D) mindestens einen Vertreter einer Monomerspezies ausgewählt aus der Reihe Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid und/oder N-tertiär Butylacrylamid darstellt.

Copolymer nach einem der Ansprüche 1 bis 8, dadurch gekennzeichnet, dass die Struktureinheit (D) durch die folgende allgemeine Formel (VII) repräsentiert wird: 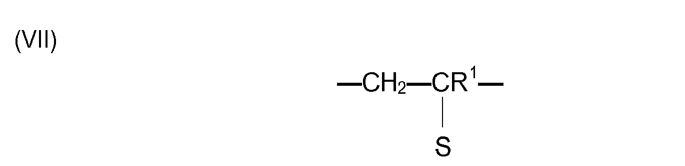 worin S gleich oder verschieden ist und durch -COOMₖ repräsentiert wird, wobei R¹ die vorstehend genannte Bedeutung besitzt, und M ein Kation der Reihe Wassterstoff, Alkali-, Erdalkali-, Erdalkaliion, mit k = Wertigkeit.

Copolymer nach einem der Ansprüche 1 bis 9, dadurch gekennzeichnet, dass die Struktureinheit (D) mindestens einen Vertreter einer Monomerspezies ausgewählt aus der Reihe Acrylsäure, Natriumacrylat, Methacrylsäure und/oder Natriummethacrylat darstellt.

Das Copolymer kann im Rahmen der vorliegenden Erfindung zusätzlich bis zu 40 Mol-%, bevorzugt 0,1 bis 30 Mol-%, einer Struktureinheit (E) enthalten, welche durch die allgemeine Formel (VIII) repräsentiert wird: 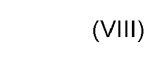 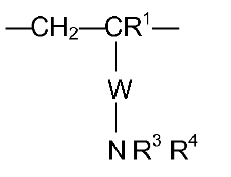 worin W gleich oder verschieden ist und durch -CO-O-(CH₂)ₓ repräsentiert wird, sowie R¹, R³, R⁴ jeweils die vorstehend genannten Bedeutungen haben, und x = eine ganze Zahl von 1 bis 6, bevorzugt 2 oder 3 ist. Vorzugsweise wird die zusätzliche Struktureinheit (E) ausgewählt aus mindestens einem Vertreter einer Monomerspezies ausgewählt aus der Reihe [3-(Methacryloylamino)-propyl]-dimethylamin, [3-(Acryloylamino)-propyl]-dimethylamin, [2-(Methacryloyl-oxy)-ethyl]-dimethylamin, [2-(Acryloyl-oxy)-ethyl]-dimethylamin, [2-(Methacryloyl-oxy)-ethyl]-diethylamin und/oder [2-(Acryloyloxy)-ethyl]-diethylamin.

In einer weiteren Variante kann das Copolymer gemäß Erfindung zusätzlich zu den Struktureinheiten (A) und (B) sowie ggf. (C), (D) und (E) eine Struktureinheit (F) der folgenden allgemeinen Formeln (IX) und/oder (X) enthalten: 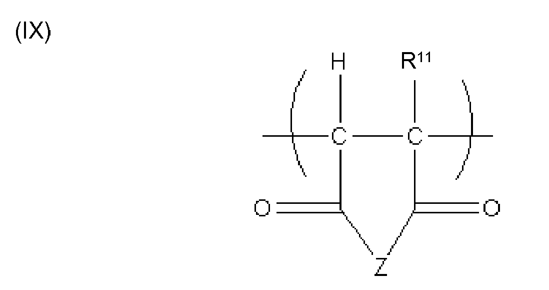 mit
R¹¹ mit den genannten Bedeutungen
Z gleich oder verschieden sowie repräsentiert durch O und/oder NH; 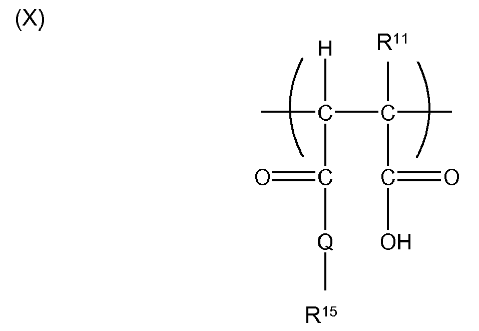 mit R¹¹ mit den genannten Bedeutungen, Q = O oder NH, R¹⁵ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α}-R¹⁶ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α= eine ganze Zahl von 1 bis 350 mit R¹⁶ gleich oder verschieden sowie repräsentiert durch eine unverzweigte oder verzweigte C₁ - C₄ Alkylgruppe.

Neben dem kationischen Copolymer beansprucht die vorliegende Erfindung auch dessen Verwendung, vorzugsweise als Zusatzmittel für wässrige Baustoffsysteme, die anorganische Bindemittel enthalten, insbesondere Calciumsulfat-basierte Bindemittel, vorzugsweise Calciumsulfat-Halbhydrat, Gips oder Anhydrit, und Kalk. Im Vordergrund steht hierbei insbesondere die Maskierung von Tonbestandteilen und/oder die Dispergierung, und hier vor allem der Bindemittel-Anteile. Die kationischen Copolymere werden meist in Form von Formulierungen gemeinsam mit anderen Komponenten appliziert. Im Vergleich mit den aus dem Stand der Technik bekannten Maskierungsmitteln eignet sich das erfindungsgemäße Copolymer aufgrund seiner Monomerzusammensetzung überraschend gut bei der Herstellung Calciumsulfat-haltiger Suspensionen.

Bevorzugte Einsatzfelder der Copolymere sind Trockenmörtelmischungen, Putzsystemen sowie die Herstellung von plattenförmigen Elementen, insbesondere von Gipskartonplatten, von Spachtelmassen und sogenannten Underlayments ("Self Levelling Underlayments"; SLU), die auch als selbstverlaufende Ausgleichsmassen bekannt sind.

Wie bereits erwähnt, steht im vorliegenden Fall bei allen Anwendungen vorrangig die Kompatibilität mit den bekannten dispergierend wirkenden Fließmitteln in bauchemischen Systemen im Vordergrund und hier insbesondere in Systemen die auf Gips basieren und störende Tonanteile aufweisen. Dabei sind die beanspruchten Copolymere keineswegs auf ausgewählte Fließmittel beschränkt. Vielmehr können sie mit allen bekannten Vertretern kombiniert werden. Die vorliegende Erfindung beansprucht aus diesem Grund auch die Verwendung der Copolymere in Kombination mit mindestens einem anderen Dispergiermittel vom Typ Polycarboxylatether, Polycarboxylatester, phosphorhaltige Polykondensationsprodukte, Naphthalinsulfonat-Formaldehyd-Kondensationsprodukte ("BNS") und Melaminsulfonat-Formaldehyd-Kondensationsprodukte ("MSF").

Bei dieser anderen Komponente mit dispergierenden Eigenschaften handelt es sich bevorzugt um
a) mindestens eine Komponente mit dispergierenden Eigenschaften ausgewählt aus der Reihe Verbindung mindestens enthaltend ein verzweigtes Kammpolymer mit Polyether-Seitenketten, Naphthalinsulfonat-Formaldehyd-Kondensat ("BNS") und Melaminsulfonat-Formaldehyd-Kondensat ("MSF"),
   und/oder
b) ein Polykondensationsprodukt enthaltend
   (I) mindestens eine einen Aromaten oder Heteroaromaten und eine Polyetherseitenkette aufweisende Struktureinheit und
   (II) mindestens eine phosphatierte einen Aromaten oder Heteroaromaten aufweisende Struktureinheit und
   (III) mindestens eine einen Aromaten oder Heteroaromaten aufweisende Struktureinheit,
wobei sich Struktureinheit (II) und Struktureinheit (III) ausschließlich dadurch unterscheiden, dass die OP(OH)₂-Gruppe der Struktureinheit (II) in Struktureinheit (III) durch H ersetzt ist und Struktureinheit (III) ungleich Struktureinheit (I) ist.

In Verbindung mit gipshaltigen bauchemischen Zusammensetzungen sind Dispergiermittel weit verbreitete Hilfsmittel, um die Mischung aus Wasser und CalciumsulfatHemihydrat zu verflüssigen und um die so erhaltene wässrige Slurry bei insgesamt reduzierten Bedarf an Anmachwasser fließfähig zu halten. Sulfonierte β-Naphthalin-Formaldehyd-Harze ("BNS") und sulfonierte Melamin-Formaldehyd-Kondensationsprodukte ("MFS") sind als Fließmittel bestens bekannt, haben allerdings eine eingeschränkte Wirkungsweise. Die Herstellung und Verwendung von BNS ist bspw. aus den Patentdokumenten EP 0 214 412 A1 und DE-PS 2 007 603 bekannt, deren Offenbarungsgehalt substantieller Bestandteil der vorliegenden Offenbarung ist. Die Wirksamkeit und Eigenschaften von BNS können durch Veränderung des MolVerhältnisses zwischen Formaldehyd und der Naphthalin-Komponente verändert werden, wobei dieses Verhältnis normalerweise zwischen 0,7 und 3,5 beträgt. Das Verhältnis zwischen Formaldehyd und der sulfonierten Naphthalin-Komponente beträgt vorzugsweise von 0,8 bis 3,5 : 1,0. BNS-Kondensationsprodukte werden üblicherweise Bindemittel-haltige Zusammensetzungen in Anteilen von 0,01 bis 6,0 Gew.-% zugesetzt.

Sulfonierte Melamin-Formaldehyd-Kondensationsprodukte sind ebenfalls zur Fließverbesserung von Bindemittel-haltigen Zusammensetzungen wie bspw. Trockenmörtelmischungen oder anderen Zement-gebundenen bauchemischen Zusammensetzungen, aber auch im Zusammenhang mit der Herstellung von Gipskartonplatten weit verbreitet. Melamin steht in diesem Zusammenhang als prominenter Vertreter der s-Triazine. Sie bewirken eine starke Verflüssigung der bauchemischen Zusammensetzungen, ohne dabei bei der Verarbeitung oder hinsichtlich der funktionellen Eigenschaften der ausgehärteten Bauprodukte unerwünschte Nebeneffekte zu verursachen. Wie für die BNS-Technologie, so existiert auch hinsichtlich der MFS-Harze ein breiter Stand der Technik. Näheres hierzu findet sich bspw. in DE 196 09 614 A1, DE 44 11 797 A1, EP 0 059 353 A1 und DE 195 38 82 A1, die ebenfalls in der Gesamtheit ihrer Offenbarungen substantieller Bestandteil der vorliegenden Beschreibung sind.

DE 196 09 614 A1 beschreibt ein wasserlösliches Polykondensationsprodukt, basierend auf einem Amino-s-Triazin und wird als Verflüssiger für wässrige Bindemittel-haltige Suspensionen auf Zement-, Kalk- oder Gipsbasis eingesetzt. Diese Polykondensationsprodukte sind in zwei Kondensationsschritten zugänglich, wobei in einer Vorkondensation das Amino-s-Triazin, die Formaldehyd-Komponente und das Sulfit bei einem Molverhältnis von 1 bis 0,5 : 5,0 bis 0,1 : 1,5 kondensiert werden. Bevorzugt wird als Amino-s-Triazin Melamin eingesetzt. Weitere geeignete Vertreter sind Aminoplastbildner aus der Gruppe Harnstoff, Thioharnstoff, Dicyandiamid oder Guanidine und Guanidinsalze.

Gemäß der DE 44 11 797 A1 werden unter Verwendung von Formaldehyd Sulfanylsäure-haltige Kondensationsprodukte basierend auf Amino-s-Triazinen mit mindestens zwei Aminogruppen hergestellt. Die Sulfanylsäure wird dabei in Anteilen von 1,0 bis 1,6 Mol pro Mol Amino-s-Triazin eingesetzt und in wässriger Lösung mit einem Alkali- oder Erdalkalimetallhydroxid neutralisiert. In einem weiteren Verfahrensschritt wird der Formaldehyd in Mengen von 3,0 bis 4,0 Mol pro Mol Amino-s-Triazin bei einem pH-Wert zwischen 5,0 und 7,0, sowie bei Temperaturen zwischen 50 und 90° Celsius zugesetzt. Die endgültige Viskosität der Lösung beträgt zwischen 10 und 60 cSt bei 80° C.

Entsprechend EP 0 059 353 A1 sind hochkonzentrierte und niedrigviskose wässrige Lösungen von Melamin/Aldehydharzen durch Reaktion von Melamin und einem Aldehyd in einem alkalischen Medium zugänglich, wobei in einem ersten Verfahrensschritt ein Alkalisulfat, Erdalkalisulfat oder ein (Erd-)Alkalisulfonat, oder eine andere geeignete Aminokomponente zu einem Vorkondensationsprodukt umgesetzt werden. In einem nachfolgenden Reaktionsschritt wird diese Mischung mit einem anderen Amin, wie bspw. einer Aminosäure oder einer Aminocarbonsäure umgesetzt, und schließlich die erhaltene Harzlösung auf einen alkalischen pH-Wert gebracht.

DE 195 38 821 A1 beschreibt ein Kondensationsprodukt, welches auf einem Amino-s-Triazin mit mindestens zwei Aminogruppen und Formaldehyd aufbaut, und darüber hinaus einen hohen Gehalt an Sulfonsäuregruppen und einen geringen Gehalt an Formiat aufweist. Derartige Produkte können hergestellt werden durch Umsetzung des Amino-s-Triazins, Formaldehyd und einem Sulfid bei einem bestimmten Molverhältnis in wässriger Lösung und bei Temperaturen zwischen 60 und 90° C, sowie einem pH-Wert zwischen 9,0 und 13,0 bis das Sulfid nicht mehr nachweisbar ist. In einem anschließenden Reaktionsschritt, bei einem pH-Wert zwischen 3,0 und 6,5, sowie Temperaturen zwischen 60 und 80° C wird solange weiterreagiert, bis das Kondensationsprodukt bei 80° C eine Viskosität zwischen 5 und 50 mm²/s aufweist. Schließlich wird das Kondensationsprodukt auf einen pH-Wert zwischen 7,5 und 12,0 gebracht, oder thermisch bei einem pH-Wert ≥ 10,0 und Temperaturen zwischen 60 und 100° C nachbehandelt.

Die Komponente a) wird vorzugsweise ausgewählt aus der Reihe Polycarboxylatether a₁), Polycarboxylatether a₂), ungeladenes Copolymer a₃) oder Mischungen daraus.

Bevorzugt ist eine Variante, a₁) bei der ein Copolymer, bestehend aus,
1) mindestens einem olefinisch ungesättigten Monocarbonsäure-Comonomer oder einem Ester oder ein Salz davon und/oder einem olefinisch ungesättigten Sulfonsäure-Comonomer oder einem Salz davon,
   und
2) mindestens einem Comonomer der allg. Formel (I) 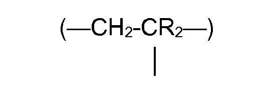 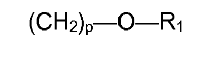 worin R₁ für 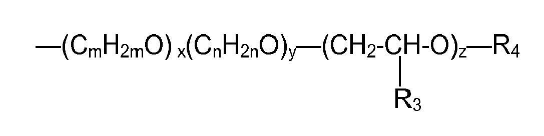 darstellt und R₂ für H oder einen aliphatischen Kohlenwasserstoffrest mit 1 bis 5 C-Atomen; R₃ = unsubstituierter oder substituierter Arylrest und bevorzugt Phenyl, und R₄ = H oder ein aliphatischer Kohlenwasserstoffrest mit 1 bis 20 C-Atomen, ein cycloaliphatischer Kohlenwasserstoffrest mit 5 bis 8 C-Atomen, ein substituierter Arylrest mit 6 bis 14 C-Atomen oder ein Vertreter der Reihe 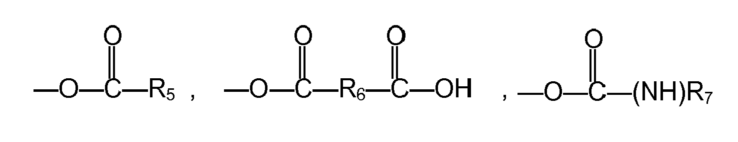 steht, wobei R₅ und R₇ jeweils für einen Alkyl-, Aryl-, Aralkyl-, oder Alkaryl-Rest und R₆ für einen Alkyliden-, Aryliden-, Aralkyliden- oder Alkaryliden-Rest stehen,
   und
   p = 0, 1, 2, 3 oder 4
   m, n bedeuten unabhängig voneinander 2, 3, 4 oder 5,
   x und y bedeuten unabhängig voneinander eine ganze Zahl ≤350 und
   z = 0 bis 200,
   wobei (I) im Copolymer a₁) die Comonomer-Einheiten, welche die Komponenten 1) und 2) darstellen, jeweils keine innermolekularen Unterschiede aufweisen, und/oder (II) das Copolymer a₁) eine polymere Mischung der Komponenten 1) und 2) darstellt, wobei in diesem Fall die Comonomer-Einheiten innermolekulare Unterschiede hinsichtlich der Reste R₁ und/oder R₂ und/oder R₃ und/oder R₄ und/oder R₅ und/oder R₆ und/oder R₇ und/oder m und/oder m und/oder x und/oder y und/oder z aufweisen und wobei sich die angesprochenen Unterschiede insbesondere auf die Zusammensetzung und Länge der Seitenketten beziehen.

Dabei kann das Copolymer a₁) die Comonomer-Komponente 1) in Anteilen von 30 bis 99 Mol-% und die Comonomer-Komponente 2) in Anteilen von 70 bis 1 Mol-% enthalten und besonders bevorzugt in Anteilen von 40 bis 90 Mol-%, wobei dann die Comonomer-Komponente 2) in Anteilen von 60 bis 10 Mol-% vorliegt.

Die Comonomer-Komponente 1) steht vorzugsweise für eine Acrylsäure oder ein Salz davon, und die Comonomer-Komponente 2) mit p = 0 oder 1 enthält eine Vinyl- oder Allylgruppe und als R₁ einen Polyether. Sehr vorteilhaft ist es, wenn die Comonomer-Komponente 1) aus der Reihe Acrylsäure, Methacrylsäure, Crotonsäure, Isocrotonsäure, Allylsulfonsäure, Vinylsulfonsäure und deren geeignete Salze sowie deren Alkyl-oder Hydroxyalkylester, stammt.

Ebenfalls vorgesehen ist, dass das Copolymer a₁) zusätzliche Baugruppen in copolymerisierter Form aufweist, wobei es sich bei den zusätzlichen Baugruppen um Styrole, Acrylamide und/oder um hydrophobe Verbindungen handelt, wobei Esterstruktureinheiten, Polypropylenoxid- und Polypropylenoxid/Polyethylenoxid-Einheiten besonders bevorzugt sind.

Das Copolymer a₁) sollte die zusätzliche Baugruppe in Anteilen bis 5 Mol-%, bevorzugt von 0,05 bis 3,0 Mol-% und insbesondere von 0,1 bis 1,0 Mol-% enthalten.

Bezüglich des Copolymers a₁) steht die Formel (I) für einen Allyl- oder Vinylgruppenhaltigen Polyether.

Bei dem Polycarboxylatester a₂) handelt es sich bevorzugt um ein Polymer, herstellbar durch Polymerisation eines Monomergemisches (I), enthaltend als Hauptkomponente einen Vertreter des Monomertyps Carbonsäure.

Gemäß Erfindung kann die Monomermischung (I) einen (Alkoxy)polyalkylenglykolmono(meth)acrylsäureester-Monomer (a) der allgemeinen Formel (II) 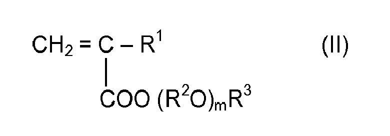 enthalten, worin R¹ für ein Wasserstoffatom oder eine CH₃-Gruppe steht, R²O für einen Vertreter oder eine Mischung aus mind. zwei Oxyalkylengruppen mit 2 bis 4 Kohlenstoffatomen, R³ für ein Wasserstoffatom oder eine Alkylgruppe mit 1 bis 5 Kohlenstoffatomen und m für eine Zahl zwischen 1 und 250 steht und die durchschnittliche Molzahl der zugesetzten Oxyalkylengruppe repräsentiert,
zusätzlich als Monomer (b) eine (Meth)acrylsäure der allgemeinen Formel (III), 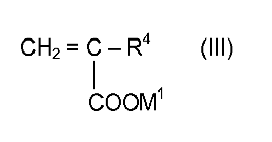 worin R⁴ für ein Wasserstoffatom oder eine CH₃-Gruppe steht und M¹ für ein Wasserstoffatom, ein einwertiges Metallatom, ein zweiwertiges Metallatom, eine Ammoniumgruppe oder eine organische Amingruppe, und ggf. ein Monomer (c), welches mit den Monomeren (a) und (b) copolymerisierbar ist. Das Monomer (a) kann dabei in einer Menge von 5 bis 98 Gew.-%, das Monomer (b) in einer Menge von 2 bis 95 Gew.-% und das Monomer (c) in einer Menge bis 50 Gew.-% in der Monomermischung (I) enthalten sein, wobei sich die jeweiligen Mengen der Monomere (a), (b) und (c) zu 100 Gew.-% addieren.

Bei dem Monomer (a) handelt es sich um ein Hydroxy-ethyl(meth)acrylat, Hydroxypropyl(meth)acrylat, Polyethylen-glykol-mono(meth)acrylat, Polypropylen-glykolmono(meth)acrylat, Polybutylen-glykol-mono(meth)acrylat, Polyethylen-glykolpolypropylen-glykol-mono(meth)acrylat, Polyethylen-glykol-polybutylen-glykolmono(meth)acrylat, Polypropylen-glykol-polybutylen-glykol-mono(meth)acrylat, Polyethylen-glykol-polypropylen-glykol-polybutylen-glykol-mono(meth)acrylat, Methoxy-polyethylen-glykol-mono(meth)acrylat, Methoxy-polypropylen-glykol-mono(meth)acrylat, Methoxy-polybutylen-glykol-mono(meth)acrylat, Methoxy-polyethylen-glykol-polypropylen-glykol-mono(meth)acrylat, Methoxy-polyethylen-glykol-polybutylen-glykol-mono(meth)acrylat, Methoxy-polypropylen-glykol-polybutylen-glykol-mono(meth)acrylat, Methoxy-polyethylen-glykol-polypropylen-glykol-polybutylen-glykol-mono(meth)acrylat, Ethoxy-polyethylen-glykol-mono(meth)acrylat, Ethoxy-polypropylen-glykol-mono(meth)acrylat, Ethoxy-polybutylen-glykol-mono(meth)acrylat, Ethoxy-polyethylen-glykol-polypropylen-glykol-mono(meth)acrylat, Ethoxy-polyethylenglykol-polybutylen-glykol-mono(meth)acrylat, Ethoxy-polypropylen-glykol-polybutylen-glykol-mono(meth)acrylat, Ethoxy-polyethylen-glykol-polypropylen-glykol-polybutylen-glykol-mono(meth)acrylat oder Mischungen daraus.

Acrylsäure, Methacrylsäure, einwertige Metallsalze, zweiwertige Metallsalze, Ammoniumsalze und organische Aminsalze davon und Mischungen sind typische Vertreter des Monomer (b).

Bei dem Monomer (c) kann es sich um mind. einen Vertreter der Ester eines aliphatischen Alkohols mit 1 bis 20 Kohlenstoffatomen mit einer ungesättigten Carbonsäure handeln, wobei als ungesättigte Carbonsäure Maleinsäure, Fumarsäure, Citraconsäure, (Meth)acrylsäure oder einwertige Metallsalze, zweiwertige Metallsalze, Ammoniumsalze oder organische Aminsalze davon geeignet sind. Monoester oder Diester von ungesättigten Dicarbonsäuren, wie Maleinsäure, Fumarsäure oder Citraconsäure, mit aliphatischen C₁-C₂₀-Alkoholen, C₂-C₄-Glykolen oder mit (Alkoxy)polyalkylenglykolen sind besonders geeignet.

Erfindungsgemäß handelt es sich bei der Komponente a₂) vorzugsweise um ein Copolymer, aufbauend auf mind. einem der folgenden Monomere:
A) ein ethylenisch ungesättigtes Monomer, umfassend einen hydrolysierbaren Rest, wobei dieses hydrolysierbare Monomer eine aktive Bindungsstelle für mind. eine Komponente der die Formulierung aufweisenden Endzusammensetzung aufweist;
B) ein ethylenisch ungesättigtes Monomer mit mind. einer C₂-C₄-Oxyalkylenseitengruppe mit einer Kettenlänge von 1 bis 30 Einheiten;
C) ein ethylenisch ungesättigtes Monomer mit mind. einer C₂-C₄-Oxyalkylenseitengruppe mit einer Kettenlänge von 31 bis 350 Einheiten.

Das ethylenisch ungesättigte Monomer der Komponente A) umfasst mind. ein Anhydrid oder Imid und/oder mind. ein Maleinsäureanhydrid oder Maleiimid.

Weiterhin ist vorgesehen, dass das ethylenisch ungesättigte Monomer der Komponente A) einen Acrylsäureester mit einer Esterfunktionalität umfasst, welcher den hydrolysierbaren Rest enthält.

Bei der Esterfunktionalität sollte es sich mind. um einen Hydroxypropyl- oder Hydroxyethyl-Rest handeln.

Das Copolymer a₂) in der Komponente A) sollte bevorzugt mehr als ein ethylenisch ungesättigtes Monomer mit einem hydrolysierbaren Rest aufweisen, und das ethylenisch ungesättigte Monomer der Komponente A) als Rest mind. mehr als einen Vertreter der ethylenisch ungesättigten Monomere, mind. einen Vertreter eines hydrolysierbaren Rests oder eine Mischung aus beiden.

In einer weiteren bevorzugten Variante kann der hydrolysierbare Rest mind. eine C₂-C₂₀-Alkoholfunktionalität aufweisen, wobei es sich beim hydrolysierbaren Rest dann mind. um einen C₁-C₂₀-Alkylester, einen C₁-C₂₀-Aminoalkylester oder ein Amid handelt.

Mind. ein ethylenisch ungesättigtes Monomer der Komponente B) oder C) weist eine C₂-C₈-Alkelylether-Gruppe auf, wobei in diesem Fall das ethylenisch ungesättigte Monomer einen Vinyl-, Allyl- oder (Methyl)allylether-Rest aufweist oder von einem ungesättigten C₂-C₈-Alkohol abgeleitet ist, bei dem es sich um mind. einen Vertreter der Reihe Vinylalkohol, (Meth)allylalkohol, Isoprenol oder Methylbutenol handelt.

Im Copolymer a₂) können die ethylenisch ungesättigten Monomerseitengruppen der Komponente B) oder C) mind. eine C₄-Oxyalkylen-Einheit aufweisen, wobei mind. ein ethylenisch ungesättigtes Monomer der Komponente B) oder C) auch einen C₂-C₈-Carbonsäureester, der insbesondere hydrolysierbar ist, aufweisen sollte. Die Oxyalkylenseitengruppe weist vorzugsweise mind. ein Ethylenoxid, ein Propylenoxid, ein Polyethylenoxid, ein Polypropylenoxid oder Mischungen daraus auf.

Vorgesehen ist ebenfalls, dass das Copolymer a₂) in der Komponente C) mind. einen nicht-ionischen und/oder einen nicht-hydrolysierbaren Monomerrest oder Mischungen daraus aufweist.

Bezüglich des nicht-ionischen Copolymers a₃) sieht die Erfindung vor, dass es sich um einen Vertreter der allgemeinen Formel (IV) 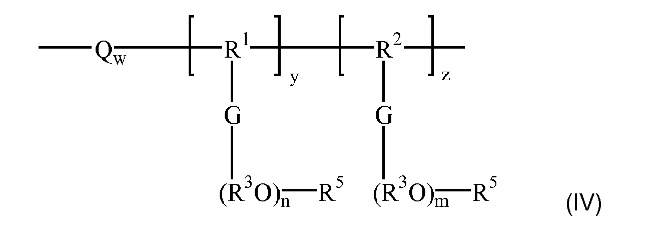 handelt,
worin Q für ein ethylenisch ungesättigtes Monomer mit mindestens einem hydrolysierbaren Rest steht, G bedeutet O, C (O)-O oder O-(CH₂)ₚ-O mit p = 2 bis 8, wobei Mischungen der Varianten von G in einem Polymer möglich sind; R¹ und R² bedeuten unabhängig voneinander mind. ein C₂-C₈-Alkyl; R³ umfasst (CH₂)_{c}, wobei es sich bei c um eine ganze Zahl zwischen 2 und 5 handelt und wobei Mischungen der Vertreter von R³ im selben Polymermolekül möglich sind; R⁵ bedeutet mind. einen Vertreter ausgewählt aus der Reihe H, einen linearen oder verzweigten, gesättigten oder ungesättigten C₁-C₂₀ aliphatischen Kohlenwasserstoffrest, einen C₅-C₈ cycloaliphatischen Kohlenwasserstoffrest oder einen substituierten oder unsubstituierten C₆-C₁₄ Arylrest; m = 1 bis 30, n = 31 bis 350, w = 1 bis 40, y = 0 bis 1 und z = 0 bis 1, wobei die Summe (y + z) > 0 ist.

Das nicht-ionische Copolymer a₃) kann alternativ aber auch ein Vertreter der allgemeinen Formel (V) 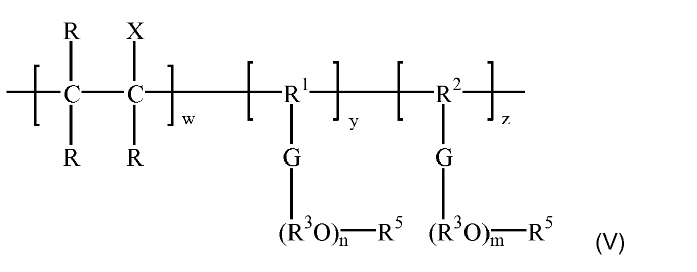 sein, worin X für einen hydrolysierbaren Rest und R für H oder CH₃ stehen; G, p, R¹, R², R³, R⁵, m, n, w, y, z und (y + z) besitzen die unter der Formel (IV) genannten Bedeutungen.

Bei diesem hydrolysierbaren Rest handelt es sich um mind. einen Vertreter der Reihe Alkylester, Aminoalkylester, Hydroxyalkylester, Aminohydroxyalkylester oder Amid.

Es wurde als weiterhin vorteilhaft festgestellt, wenn es sich beim nicht-ionischen Copolymer a₃) um mind. einen Vertreter der allgemeinen Formel (VI) 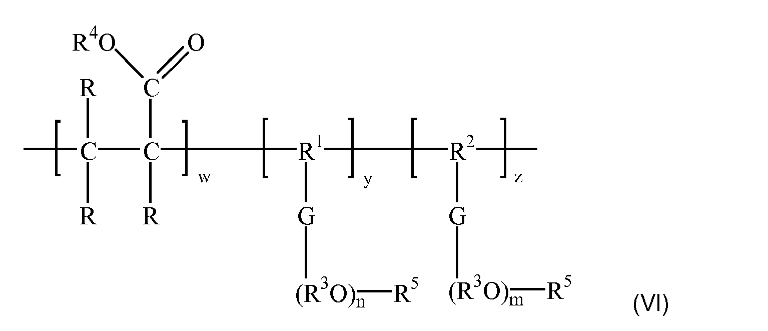 handelt, worin R⁴ mind. einen C₁-C₂₀ Alkyl- oder C₂-C₂₀ Hydroxyalkylrest bedeutet und die Reste G, p, R, R¹, R², R³, c, R⁴, R⁵ sowie m, n, w, y, z und (y + z) besitzen die unter den Formeln (IV) und (V) genannten Bedeutungen besitzen. In diesem Fall sollte p = 4 sein, R⁴ = C₂ H₄OH oder C₃ H₆OH bedeuten, jeder der Reste R⁵ für H stehen, m = 5-30, n = 31-250, w = 1,5-30, y = 0 bis 1, z = 0 bis 1 und (y + z) > 0.

Das molare Verhältnis im Copolymer a₃) sollte bezüglich w zu der Summe (y + z) 1 : 1 bis 20 : 1 betragen und vorzugsweise 2 : 1 bis 12 : 1 sein.

Das Copolymer a₃) kann alternativ aber auch ein nicht-ionisches Polyether-PolyesterCopolymer sein.

Die Struktureinheiten (I), (II), (III) der Komponente b) sind vorzugsweise durch folgende Formeln repräsentiert 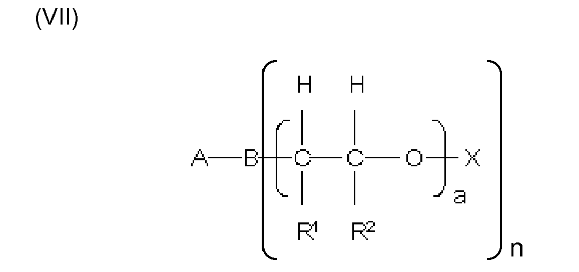 mit
A gleich oder verschieden sowie repräsentiert durch eine substituierte oder unsubstituierte aromatische oder heteroaromatische Verbindung mit 5 bis 10 C-Atomen
mit
B gleich oder verschieden sowie repräsentiert durch N, NH oder O
mit
n = 2, falls B = N, und n = 1, falls B = NH oder O
mit
R¹ und R² unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit
a gleich oder verschieden sowie repräsentiert durch eine ganze Zahl von 1 bis 300
mit X
gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H 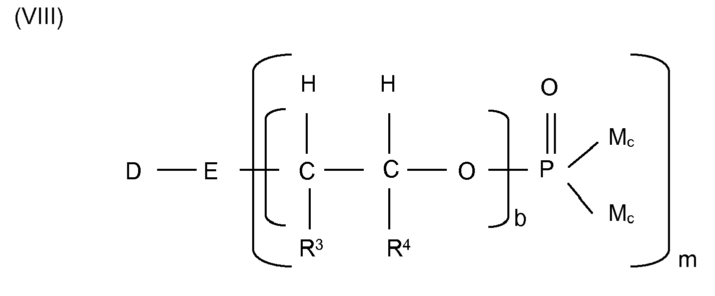 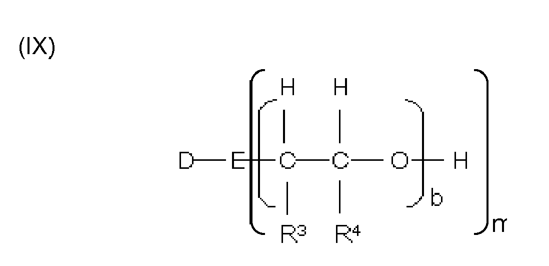 für (VIII) und (IX) jeweils:
mit
D gleich oder verschieden sowie repräsentiert durch eine substituierte oder unsubstituierte heteroaromatische Verbindung mit 5 bis 10 C-Atomen mit
E gleich oder verschieden sowie repräsentiert durch N, NH oder O mit
m = 2, falls E = N, und m = 1, falls E = NH oder O
mit
R³ und R⁴ unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit b gleich oder verschieden sowie repräsentiert durch eine ganze Zahl von 0 bis 300
mit
M unabhängig voneinander ein Alkali-, Erdalkali-, Ammonium- oder ein organisches Ammonsäure-Ion und/oder H,
mit
c = 1 oder im Falle eines Alkali-Ions = ½.

Dabei kann die Komponente b) eine weitere Struktureinheit (X) enthalten, welche durch folgende Formel repräsentiert wird 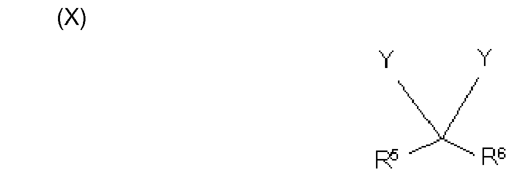 mit
Y unabhängig voneinander gleich oder verschieden und repräsentiert durch (VII), (VIII), (IX) oder weitere Bestandteile des Polykondensationsproduktes b)
mit
R⁵ gleich oder verschieden und repräsentiert durch H, CH₃, COMc oder eine substituierte oder unsubstituierte aromatische oder heteroaromatische Verbindung mit 5 bis 10 C-Atomen
mit
R⁶ gleich oder verschieden und repräsentiert durch H, CH₃, COMc oder eine substituierte oder unsubstituierte aromatische oder heteroaromatische Verbindung mit
5 bis 10 C-Atomen, wobei Mc die bzgl. der Formel (VIII) genannten Bedeutungen besitzen.

Die Reste R⁵ und R⁶ in Struktureinheit (X) der Komponente b) können unabhängig voneinander gleich oder verschieden sein und durch H, COMC und/oder Methyl repräsentiert werden. Das Molverhältnis der Struktureinheiten [(VII) + (VIII) + (IX)] : (X) in Komponente b) sollte 1 : 0,8 bis 3 betragen.

Als besonders bevorzugt ist als Molverhältnis der Struktureinheiten (VII) : [(VIII) + (IX)] in Komponente b) 1 : 15 bis 15 : 1 und bevorzugt 1 : 10 bis 10 : 1 anzusehen.

Das Molverhältnis der Struktureinheiten (VIII) : (IX) in Komponente b) beträgt vorzugsweise1 : 0,005 bis 1 : 10.

Erfindungsgemäß liegt das Polykondensationsprodukt b) in einer wässrigen Lösung vor, die 2 bis 90 Gew.-% Wasser und 98 bis 10 Gew.-% gelöste Trockenmasse enthält.

Zum Zwecke einer besserten Verarbeitbarkeit bauchemischer System, vorzugsweise auf CaSO₄-Basis, sollten die dispergierenden Komponenten a) und b) gemeinsam mit dem erfindungsgemäßen Copolymer im formulierten Zustand eingesetzt werden, wobei dann die Komponente a) in Anteilen von 5 bis 95 Gew.-%, vorzugsweise von 10 bis 60 Gew.-% und besonders bevorzugt von 15 bis 40 Gew.-%, jeweils bezogen auf die Gesamtformulierung, enthalten sein sollte. Die Komponente b) sollte in Anteilen von 5 bis 100 Gew.-%, vorzugsweise von 10 bis 60 Gew.-% und besonders bevorzugt von 15 bis 40 Gew.-%, jeweils bezogen auf die Gesamtformulierung, enthalten sein.

Zusätzlich zu den Komponenten a) und b) kann das System mindestens einen Entschäumer als Komponente c) und/oder eine Komponente d) mit oberflächenaktiver Wirkung enthält, wobei die Komponenten c) und d) strukturell voneinander verschieden sind.

Bezüglich der Entschäumer-Komponente c) sollte es sich um mindestens einen Vertreter der Reihe Mineralöl, pflanzliches Öl, Siliconöl, Silikon-haltige Emulsionen, Fettsäure, Fettsäureester, organisch modifiziertes Polysiloxan, Boratester, Alkoxylat, Polyoxialkylen-Copolymer, Ethylenoxid (EO)-Propylenoxid (PO)-Blockpolymer, acetylenisches Diol mit entschäumenden Eigenschaften, Phosphorsäureester der Formel P(O)(O-R₈)₃₋ₓ(O-R₉)ₓ worin P = Phosphor, O = Sauerstoff und R₈ und R₉ unabhängig voneinander ein C₂₋₂₀ Alkyl oder eine Arylgruppe bedeuten und x = 0, 1 oder 2, handeln.

Der Entschäumer-Komponente c) kann aber auch mindestens ein Vertreter der Reihe Trialkylphosphat, Polyoxypropylencopolymer und/oder Glycerinalkoholacetat sein, oder Triiso-Butylphosphat.

Vorzugsweise stellt die Entschäumer-Komponente c) eine Mischung aus einem Trialkylphosphat und einem Polyoxypropylencopolymer dar.

Als Komponente d) mit oberflächenaktiver Wirkung kommt mindestens ein Vertreter der Reihe Ethylenoxid/Propylenoxid (EO/PO) Blockcopolymer, Styrol/Maleinsäurecopolymer, Fettsäurealkoholalkoxylat, Alkoholethoxylat R₁₀-(EO)-H mit R₁₀ = eine aliphatische Kohlenwasserstoffgruppe mit 1 bis 25 Kohlenstoffatomen, acetylenisches Diol, Monoalkylpolyalkylen, ethoxyliertes Nonylphenol, Alkylsulfat, Alkylethersulfat, Alkylethersulfonat oder Alkylethercarboxylat in Frage, wobei Alkohole mit einer Polyalkylengruppe enthalten sein können, die eine Kohlenstoffkettenlänge von 2 bis 20 Kohlenstoffatomen aufweisen. Die Polyalkylengruppe sollte vor allem eine Kohlenstoffkettenlänge von 3 bis 12 Kohlenstoffatomen aufweisen.

Die dispergierend wirkende Komponente kann die Entschäumer-Komponente c) in freier Form, gebunden an die Dispergiermittel-Komponente a) oder in Mischung dieser beiden Formen enthalten.

Die Entschäumer-Komponente c) ist bevorzugt in Mengen von 0,01 bis 10 Gew.-% und/oder die oberflächenaktive Komponente d) in Mengen von 0,01 bis 10 Gew.-%, jeweils bezogen auf das Gesamtgewicht der Formulierung, enthalten.

Unabhängig voneinander liegen der Entschäumer c) und/oder die oberflächenaktive Komponente d) jeweils in einer Menge von 0,01 bis 5 Gew.-%, jeweils bezogen auf das Gesamtgewicht der Dispergiermittel vor.

Die Dispergiermittel-Komponente bzw. auch das bauchemische System kann als weitere zusätzliche Komponente f) eine Calcium-Silikat-Hydrat (C-S-H)-haltige Zusammensetzung enthalten, bei dem das Molverhältnis Calcium/Silicium (Ca/Si) 0,5 bis 2,0, vorzugsweise 0,7 bis 1,8 und besonders bevorzugt 1,6 bis 1,7 beträgt.

Das C-S-H weist vorzugsweise eine mittlere Teilchengröße < 10 µm, vorzugsweise < 1 µm und insbesondere < 0,2 µm auf, bestimmt durch Lichtstreuung mit der Vorrichtung Master Sizer 2000 der Fa. Malvern. Bevorzugt beträgt die mittlere Teilchengröße > 0,01 µm, vorzugsweise zwischen 0,1 und 1,0 µm und insbesondere zwischen 0,2 µm und 0,5 µm.

Die C-S-H-haltige Zusammensetzung ist in vorteilhafter Weise erhältlich durch eine Reaktion einer wasserlöslichen Calcium-haltigen Verbindung mit einer wasserlöslichen Silikat-haltigen Verbindung, wobei die Reaktion zwischen der wasserlöslichen Calcium-haltigen Verbindung mit der wasserlöslichen Silikat-haltigen Verbindung vorzugsweise in Gegenwart einer wässrigen Lösung durchgeführt wird, die ein wasserlösliches Kammpolymer enthält, bei dem es sich vorzugsweise um ein Dispergiermittel vom Typ mindestens eines Vertreters der Komponente a) und/oder b) für hydraulische Bindemittel handelt. Die C-S-H-haltige Zusammensetzung ist alternativ aber auch erhältlich durch eine Reaktion eines Calciumoxyds, eines Calciumcarbonats und/oder eines Calciumhydroxyds mit einem Siliciumdioxyd während eines Mahlvorgangs, wobei die Reaktion vorzugsweise in Gegenwart einer wässrigen Lösung durchgeführt wird, die ein wasserlösliches Kammpolymer enthält, bei dem es sich vorzugsweise um ein Dispergiermittel vom Typ mindestens eines Vertreters der Komponente a) und/oder b) für hydraulische Bindemittel handelt.

In vorteilhafterweise wird das erdingungsgemäße Copolymer in Kombination mit einer Dispergiermittel-Komponente eingesetzt, die in flüssiger Form oder als Pulver, vorzugsweise als Redispersionspulver vorliegt.

Die erfindungsgemäß in der Calciumsulfat-haltigen Baustoffmischung als Adsorptionsblocker eingesetzten Copolymere können Zuschläge und insbesondere Ton-basierte Zuschläge oder Anteile in anorganischen, insbesondere in CaSO₄-basierten Baustoffmassen derart modifizieren, dass durch deren Einsatz die Oberflächen der Ton-artigen Anteile für Polycarboxylatether basierende Fließmittel (also Polyethermakromonomerstruktureinheiten und Säuremonomerstruktureinheiten aufweisende Copolymere) deutlich weniger attraktiv sind. Dies hat zur Folge, dass die Wirkungsweise der Polycarboxylatether basierenden Fließmittel nicht beeinträchtigt wird und somit die Konsistenz der Baustoffrezeptur, insbesondere der Gips-Slurry über die Zeit erhalten werden kann. Das als Adsorptionsblocker erfindungsgemäß einsetzbare Copolymer ist ein kationisch geladenes Molekül (normalerweise ein Oligomer oder Polymer), das eine besonders große Affinität zu adsorptiven Anteilen aufweist, jedoch keine bzw. nur eine geringe Attraktivität für die Oberflächen der Partikel des anorganischen Bindemittels besitzt. Durch die spezifische Ladung im Adsorptionsblocker lässt sich zum einen der Grad der Attraktivität des Moleküls zu den adsorptiven Tonanteilen steuern, zum anderen kann der Grad der repulsiven Wirkung für die Polycarboxylatether basierenden Fließmittel eingestellt werden.

In Abhängigkeit vom jeweiligen konkreten Anwendungsfall kann der als Maskierungsmittel wirkende Adsorptionsblocker vor der Zugabe der Fließmittelkomponente zur bauchemischen Gips-Mischung zugegeben werden, damit dieser mit den adsorptiven Bestandteilen wechselwirken und deren Oberflächen derart modifizieren kann, dass diese für insbesondere polycarboxylatether basierende Fließmittel nicht mehr attraktiv sind.

Insgesamt sieht die vorliegende Erfindung vor, dass die erfindungsgemäßen Copolymere oder ausgewählte Varianten davon als formulierte Mischung mit einem Dispergiermittel der bauchemischen Gips-Mischung zugegeben werden. Zusätzlich zu den genannten Komponenten können die Formulierungen auch mindestens einen Härtungsverzögerer enthalten, der die Versteifungszeiten bzw. die Verarbeitungszeit des bauchemischen Systems, insbesondere der Gipsslurry verlängert. Bezüglich der Verzögerer-Komponente sollte es sich um den Fachmann bekannte Abbindeverzögerer für Calciumsulfatbasierende Baustoffsysteme handeln, wie z.B. aus der Reihe der Chelatisierungsmittel, d.h. Komplexbildner wie Ethylendiamintetraacetat, Diethylentriaminpentacetat (z.B. die Trilon Serie erhältlich von BASF SE), Phosphate, Phosphonate (z.B. die Targon Serie erhältlich von der BK Giulini GmbH) oder Zucker, Weinsäure, Bernsteinsäure, Zitronensäure, Gluconate, Maleinsäuren, Polyacrylsäuren und deren Salze sowie Retardan (erhältlich von der Tricosal GmbH). Die Anteile der Verzögerer-Komponente an der Formulierung sollten 10 Gew.-%, bezogen auf deren Feststoffanteil, nicht überschreiten. Empfohlen werden Anteile zwischen 2,0 und 8,0 Gew.-%, bevorzugt 4,0 bis 6,5 Gew.-%.

Derartige Mischungen sind insgesamt sehr lagerstabil, vor allem stabil gegen Phasenseparation, Gelbildung etc.

Die nachfolgenden Beispiele verdeutlichen die Vorteile der vorliegenden Erfindung.

### Beispiele:

### Synthesebeispiel 1 (Kationisches Kammpolymer I)

Ein Vierhalskolben, ausgestattet mit einem Rührer, einer pH-Elektrode und einem Rückflusskühler, wurde mit 240 g Wasser und 200 g Vinyloxybutylpolyethylenglycol-3000 (hergestellt durch Ethoxylierung von Hydroxybutylvinylether mit 66 mol EO) beschickt und auf 10°C temperiert. Anschließend wurden nacheinander 0,01 g Eisen-(II)-sulfat-Heptahydrat, 72,4 g ADAME-Q (80 %), 2,5 g Natriumsalz eines organischen Sulfinsäurederivates (Brüggolit E01, Fa. Brüggemann GmbH), sowie 2,4 g Acrylsäure (99 %) und 0,9 g 3-Mercaptopropionsäure in den Kolben gegeben, worauf sich ein pH-Wert von 4,5 in der Lösung einstellte. Nach einer kurzen Mischzeit von etwa 2 Minuten wurden 2,5 g 50 %ige Wasserstoffperoxidlösung der Lösung hinzugefügt. Das Einsetzen der Polymerisation zeichnete sich durch einen stetigen Temperaturanstieg aus, welcher nach etwa 2 Minuten sein Temperaturmaximum bei ca. 35 °C erreicht hatte. Der pH-Wert der Lösung betrug zu diesem Zeitpunkt 2,9.

Zum Abschluss wurde mit 20 %iger Natriumhydroxid-Lösung ein pH-Wert von 6,5 eingestellt.

Es wurde die wässrige Lösung eines Copolymers mit einem mittleren Molgewicht von Mw = 51.489 g/mol (bestimmt durch GPC) und einem Feststoffgeahlt von 49,7 % erhalten. Die Ausbeute an Polymer im Vergleich zu nicht einpolymerisiertem ungesättigtem Alkoholethoxylat betrug 82 %.

### Synthesebeispiel 2 (Kationisches Kammpolymer II)

Ein Vierhalskolben, ausgestattet mit einem Rührer, einer pH-Elektrode und einem Rückflusskühler, wurde mit 400 g Wasser und 350 g Vinyloxybutylpolyethylenglycol-5800 (hergestellt durch Ethoxylierung von Hydroxybutylvinylether mit 130 mol EO) beschickt und auf 13°C temperiert. Anschließend wurden nacheinander 0,01 g Eisen-(II)-sulfat-Heptahydrat, 65,5 g ADAME-Q (80 %), 2,5 g Natriumsalz eines organischen Sulfinsäurederivates (Brüggolit E01, Fa. Brüggemann GmbH), sowie 2,2 g Acrylsäure (99 %) und 1,2 g 3-Mercaptopropionsäure in den Kolben gegeben, worauf sich ein pH-Wert von 4,8 in der Lösung einstellte. Nach einer kurzen Mischzeit von etwa 2 Minuten wurden 2,5 g 50 %ige Wasserstoffperoxidlösung der Lösung hinzugefügt. Das Einsetzen der Polymerisation zeichnete sich durch einen stetigen Temperaturanstieg aus, welcher nach etwa 2 Minuten sein Temperaturmaximum bei ca. 25 °C erreicht hatte. Der pH-Wert der Lösung betrug zu diesem Zeitpunkt 3,7.

Zum Abschluss wurde mit 20 %iger Natriumhydroxid-Lösung ein pH-Wert von 6,5 eingestellt.

Es wurde die wässrige Lösung eines Copolymers mit einem mittleren Molgewicht von Mw = 61.342 g/mol (bestimmt durch GPC) und einem Feststoffgehalt von 49,2 % erhalten. Die Ausbeute an Polymer im Vergleich zu nicht einpolymerisiertem ungesättigtem Alkoholethoxylat betrug 84,7 %.

### Synthesebeispiel 3 (Kationisches Kammpolymer III)

Ein Vierhalskolben, ausgestattet mit einem Rührer, einer pH-Elektrode und einem Rückflusskühler, wurde mit 5000 g Wasser und 350 g Vinyloxybutylpolyethylenglycol-5800 (hergestellt durch Ethoxylierung von Hydroxybutylvinylether mit 130 mol EO) beschickt und auf 13°C temperiert. Anschließend wurden nacheinander 0,01 g Eisen-(II)-sulfat-Heptahydrat, 35,7 g Hydroxyethylacrylat (98 %), 8,7 g ADAME-Q (80 %), 5 g einer Mischung aus Natriumsulfit, dem Dinatriumsalz der 2-Hydroxy-2-sulfinatoessigsäure und dem Dinatriumsalz der 2-Hydroxy-2-sulfonatoessigsäure, (Brüggolit FF6, Fa. Brüggemann GmbH), sowie 0,5 g Acrylsäure (99 %) und 1,4 g 3-Mercaptopropionsäure in den Kolben gegeben, worauf sich ein pH-Wert von 5,9 in der Lösung einstellte. Nach einer kurzen Mischzeit von etwa 2 Minuten wurden 2,5 g 50 %ige Wasserstoffperoxidlösung der Lösung hinzugefügt. Das Einsetzen der Polymerisation zeichnete sich durch einen stetigen Temperaturanstieg aus, welcher nach etwa 2 Minuten sein Temperaturmaximum bei ca. 25 °C erreicht hatte. Der pH-Wert der Lösung betrug zu diesem Zeitpunkt 5,7.

Zum Abschluss wurde mit 20 %iger Natriumhydroxid-Lösung ein pH-Wert von 6,5 eingestellt.

Es wurde die wässrige Lösung eines Copolymers mit einem mittleren Molgewicht von Mw = 86.799 g/mol (bestimmt durch GPC) und einem Feststoffgeahlt von 44,0 % erhalten. Die Ausbeute an Polymer im Vergleich zu nicht einpolymerisiertem ungesättigtem Alkoholethoxylat betrug 80,9 %.

### Synthesebeispiel 4 (Kationisches Kammpolymer IV)

Ein Vierhalskolben, ausgestattet mit einem Rührer, einer pH-Elektrode und einem Rückflusskühler, wurde mit 500 g Wasser und 350 g Vinyloxybutylpolyethylenglycol-5800 (hergestellt durch Ethoxylierung von Hydroxybutylvinylether mit 130 mol EO) beschickt und auf 13°C temperiert. Anschließend wurden nacheinander 0,01 g Eisen-(II)-sulfat-Heptahydrat, 16 g Hydroxypropylacrylat (98 %), 29 g ADAME-Q (80 %), 3,5 g Natriumsalz eines organischen Sulfinsäurederivates (Brüggolit E01, Fa. Brüggemann GmbH), sowie 0,5 g Acrylsäure (99 %) und 0,9 g 3-Mercaptopropionsäure in den Kolben gegeben, worauf sich ein pH-Wert von 5,6 in der Lösung einstellte. Nach einer kurzen Mischzeit von etwa 2 Minuten wurden 2,5 g 50 %ige Wasserstoffperoxidlösung der Lösung hinzugefügt. Das Einsetzen der Polymerisation zeichnete sich durch einen stetigen Temperaturanstieg aus, welcher nach etwa 2 Minuten sein Temperaturmaximum bei ca. 25 °C erreicht. Der pH-Wert der Lösung betrug zu diesem Zeitpunkt 4,9. Zum Abschluss wurde mit 20 %iger Natriumhydroxid-Lösung ein pH-Wert von 6,5 eingestellt.

Es wurde die wässrige Lösung eines Copolymers mit einem mittleren Molgewicht von Mw = 103.654 g/mol (bestimmt durch GPC) und einem Feststoffgeahlt von 44,3 % erhalten. Die Ausbeute an Polymer im Vergleich zu nicht einpolymerisiertem ungesättigtem Alkoholethoxylat betrug 82 %.

### Anwendungsbeispiel:

### Fließtests mit Calciumsulfat-Halbhydrat (beta)

Die erforderlichen Mengen des flüssigen Fließmittels und des erfindungsgemäßen Copolymers (gemäß Synthesebeispiele 1 bis 4) wurden in den Topf eines Hobart® Mischers eingewogen und die dem Wasser-Gips-Wert in den Tabellen 1 bis 4 entsprechende Menge Wasser zugegeben. Anschließen wurden 400 g Gips zusammen mit dem Beschleuniger und den angegebenen Mengen Montmorillonit-Ton zugegeben, 15 sec eingeweicht und dann für 15 sec bei 285 U/min (Stufe II) gemischt. Nach 60 sec wurde das Fließmaß mit einem Zylinder (Höhe: 10 cm, Durchmesser: 5 cm) bestimmt. Die Bestimmung Versteifungszeit erfolgte mit dem Messerschnitt-Test.

Folgende Fließmittel wurden bei den Anwendungstests verwendet: Polycarboxylatether-Fließmittel Melflux PCE 239 L/35 % N.D. (PCE 239) und VP2661/493 L/40 % N.D. (PCE 493); Naphthalinsulfonat-Kondensationsprodukt Melcret 500 L (BNS) sowie Melamin-Sulfonsäure-Formaldehyd Kondensationsprodukt Melment L 15 G (MFS). Alle Fließmittel stammten von der BASF Construction Polymers GmbH, Deutschland. Zusätzlich wurde das phosphatierte Kondensationsprodukt VP EPPR 312 L/43 % (EPPR) (ebenfalls von der BASF Construction Polymers GmbH) und das Lignin-basierende Fließmittel Borrement CA 120 (Lignin) der Fa. Borregaard LignoTech eingesetzt.

In Tabelle 1 sind die mineralogischen Zusammensetzungen der verwendeten Gipse zusammengefasst. Der zur Dotierung des reinen Gipses A verwendete quellfähige Montmorillonit-Ton wurde von der Fa. Ward's Natural Science bezogen.

**Tabelle 1: Zusammensetzung der natürlichen Calciumsulfat-Halbhydrate A, B und C**

| natürlicher Gips | CaSO₄* ½ H₂O | CaSO₄ | Dolomit | Quarz | Ton-Mineralien | andere |
|---|---|---|---|---|---|---|
| A | 95,3 % | 4,0 % | - | - | - | 0,7 % |
| B | 80,2 % | - | 8,9 % | 1,4 % | 4,2 % | 5,3 % |
| C | 87,2 % | 3,1 % | 1,2 % | 1,9 % | 2,9 % | 3,7 % |

**Tabelle 2: Veränderung des Fließverhaltens durch Zugabe der erfindungsgemäßen Copolymere 1 bis 3 (natürlicher Gips A dotiert mit 2 Gew.-% Montmorillonit)**

| Copolymer entsprechend | | Fließmittel | | | | | |
|---|---|---|---|---|---|---|---|
| Beispiel | Dosierung [wt.-%] | | Dosierung [wt.-%] | Wasser-Gips-Wert | Beschleuniger [g])* | Fließmaß [cm] | Versteifungszeit [min:s] |
| - | - | PCE 239 | 0,20 | 0,55 | 0,00 | 10,1 | 2:15 |
| 1 | 0,10 | PCE 239 | 0,20 | 0,55 | 0,50 | 21,5 | 2:15 |
| 2 | 0,10 | PCE 239 | 0,20 | 0,55 | 0,50 | 20,6 | 2:20 |
| 3 | 0,10 | PCE 239 | 0,20 | 0,55 | 0,50 | 18,5 | 2:20 |
| 3 | 0,12 | PCE 239 | 0,24 | 0,55 | 0,650 | 21,2 | 2:05 |
| 3 | 0,12 | PCE 493 | 0,24 | 0,55 | 0,650 | 20,7 | 2:20 |

| | | | | | | | |
|---|---|---|---|---|---|---|---|
| )* fein gemahlenes CaSO₄-Dihydrat | | | | | | | |

Wie in Tabelle 2 deutlich gezeigt wird, verbessern die erfindungsgemäßen Copolymere (= Kammpolymere) 1 bis 3 die Dispergiereigenschaften der Verflüssiger PCE 239 und 493 im Ton-dotierten Gips (natürlicher Gips A dotiert mit 2 % Montmorillonit). Der negative Einfluss des Tons auf die Fließfähigkeit der Gipsmasse kann durch die erfindungsgemäßen Copolymere 1 bis 3 weitestgehend aufgehoben werden.

**Tabelle 3: Veränderung des Fließmaßes durch Zugabe von unterschiedlichen Mengen Montmorillonit-Ton bzw. des Copolymers I gemäß Synthesebeispiel 1 zum natürlichen Gips A (eine konstante Dosierung von 0,10 % PCE 239 wurde für alle Tests benutzt).**

| Copolymer-Dosierung [wt.-%] | Tonanteil [Gew.-% bezogen auf Gips] | Wasser-Gips-Wrt | Beschleuniger [g] )* | Fließmaß [cm] | Versteifungszeit [min:s] |
|---|---|---|---|---|---|
| 0,0 | 0,5 | 0,57 | 0,400 | 13,0 | 2:10 |
| 0,02 | 0,5 | 0,57 | 0,400 | 18,8 | 2:15 |
| 0,05 | 0,5 | 0,57 | 0,400 | 20,4 | 2:10 |
| 0,10 | 0,5 | 0,57 | 0,400 | 21,1 | 2:15 |
| 0,0 | 1,0 | 0,57 | 0,415 | 10,5 | 2:10 |
| 0,02 | 1,0 | 0,57 | 0,415 | 16,5 | 2:10 |
| 0,05 | 1,0 | 0,57 | 0,415 | 20,1 | 2:15 |
| 0,10 | 1,0 | 0,57 | 0,415 | 20,3 | 2:15 |
| 0,02 | 2,0 | 0,57 | - | n.f. | - |
| 0,05 | 2,0 | 0,57 | 0,410 | 13,0 | 2:00 |
| 0,10 | 2,0 | 0,57 | 0,410 | 17,2 | 2:10 |
| 0,30 | 2,0 | 0,57 | 0,430 | 19,2 | 2:20 |
| 0 | 0,5 | 0,54 | 0,400 | 11,8 | 2:15 |
| 0,02 | 0,5 | 0,54 | 0,400 | 17,3 | 2:10 |
| 0,10 | 0,5 | 0,54 | 0,400 | 18,0 | 2:15 |
| 0,20 | 0,5 | 0,54 | 0,400 | 18,6 | 2:20 |
| 0,0 | 2,0 | 0,605 | - | n.f. | - |
| 0,02 | 2,0 | 0,605 | 0,440 | 17,5 | 2:05 |
| 0,10 | 2,0 | 0,605 | 0,440 | 20,8 | 2:15 |
| 0,20 | 2,0 | 0,605 | 0,440 | 22,7 | 2:20 |

| | | | | | |
|---|---|---|---|---|---|
| )* fein gemahlenes CaSO₄-Dihydrat n.f. = nicht fließfähig | | | | | |

Wie aus Tabelle 3 ersichtlich ist, verbessert die Zugabe des erfindungsgemäßen Copolymers das Fließmaß signifikant, ohne verzögernd auf das Abbindeverhalten des Gipses zu wirken. Auch bei hohen Dosierungen von 0,2 % des quellfähigen Montmorillonit-Tons kann durch die Zugabe des kationischen Kammpolymers I eine fließfähige Gipsmasse erhalten werden.

**Tabelle 4: Veränderung des Fließverhaltens durch unterschiedliche Mengen des kationischen Kammpolymers IV in Kombination mit den Fließmitteln PCE 493, EPPR und BNS (natürlicher Ton-haltiger Gips B).**

| | Fließmittel | | | | | |
|---|---|---|---|---|---|---|
| Copolymer-Dosierung [wt.-%] | | Dosierung [wt.-%] | Wasser-Gips-Wert | Beschleuniger [g] )* | Fließmaß [cm] | Versteifungszeit [min:s] |
| 0,00 | PCE 493 | 0,20 | 0,77 | 0,26 | 20,4 | 2:20 |
| 0,10 | PCE 493 | 0,10 | 0,65 | 0,30 | 20,3 | 2:20 |
| 0,10 | PCE 493 | 0,00 | 0,77 | 0,26 | 20,6 | 2:20 |
| 0,00 | EPPR | 0,20 | 0,67 | 0,16 | 20,3 | 2:15 |
| 0,10 | EPPR | 0,10 | 0,62 | 0,14 | 20,0 | 2:10 |
| 0,20 | EPPR | 0,10 | 0,57 | 0,15 | 20,0 | 2:15 |
| 0,20 | EPPR | 0,20 | 0,52 | 0,16 | 20,8 | 2:20 |
| 0,00 | BNS | 0,20 | 0,71 | 0,20 | 20,7 | 2:15 |
| 0,10 | BNS | 0,10 | 0,67 | 0,18 | 21,0 | 2:15 |
| 0,20 | BNS | 0,20 | 0,57 | 0,21 | 20,0 | 2:20 |

| | | | | | | |
|---|---|---|---|---|---|---|
| )* fein gemahlenes CaSO₄-Dihydrat | | | | | | |

Aus Tabelle 4 wird deutlich, dass durch die Kombination des erfindungsgemäßen kationischen Kammpolymers IV mit den Fließmitteln PCE 493, EPPR oder BNS eine substantielle Wasserreduktion in einem natürlichen Ton-haltigem Gips möglich wird. Das kationische Kammpolymer IV maskiert effektiv die Tonpartikel und unterdrückt dadurch deren verdickenden Effekt sowie den Wirkungsverlust der Fließmittel.

**Tabelle 5: Kombination des kationischen Kammpolymers I mit unterschiedlichen Fließmitteln in einem natürlichen Ton-haltigen Gips C**

| | Fließmittel | | | | | |
|---|---|---|---|---|---|---|
| Copolymer-Dosierung [wt.-%] | | Dosierung [wt.-%] | Wasser-Gips-Wert | Beschleuniger [g] )* | Fließmaß [cm] | Versteifungszeit [min:s] |
| 0,00 | - | 0,00 | 0,77 | 0,30 | 20,5 | 2:15 |
| 0,20 | BNS | 0,10 | 0,62 | 0,29 | 20,4 | 2:15 |
| 0,20 | MFS | 0,13 | 0,62 | 0,23 | 20,8 | 2:15 |
| 0,20 | PCE 493 | 0,05 | 0,62 | 0,29 | 20,6 | 2:10 |
| 0,20 | EPPR | 0,06 | 0,62 | 0,21 | 20,3 | 2:20 |
| 0,20 | Lignin | 0,45 | 0,62 | 0,35 | 20,3 | 2:20 |

| | | | | | | |
|---|---|---|---|---|---|---|
| )* fein gemahlenes CaSO₄-Dihydrat | | | | | | |

Die Ergebnisse in Tabelle 5 zeigen, dass das erfindungsgemäße kationische Kammpolymer I mit verschiedenen Fließmitteltypen bzw. handelsüblichen Verflüssigern beim Einsatz in natürlichen Ton-haltigen Gipsen kombiniert werden kann. Die positiv geladenen, erfindungsgemäßen Kammpolymere schaden nicht der Dispergierwirkung der negativ geladenen Fließmittel und es kommt auch nicht zu negativen Wechselwirkungen, wie z.B. Gelbildung oder Ausfälligung, mit den Fließmitteln.

## Patentansprüche

1. Copolymer enthaltend,
a) 5 bis 95 Mol-% einer kationischen Struktureinheit (A)
b) 5 bis 55 Mol-% einer makromonomeren Struktureinheit (B), und
c) 0 bis 80 Mol-% einer Struktureinheit (C)
d) 0 bis 80 Mol-% ein von der Struktureinheit (C) verschiedenen Struktureinheit (D)
wobei die Struktureinheit (A) mindestens eine Einheit der folgenden allgemeinen Formeln (I) und/oder (II) aufweist: 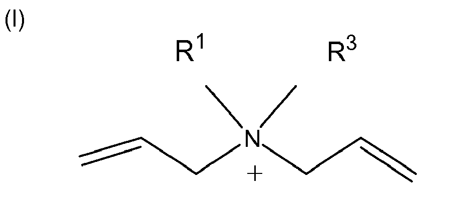 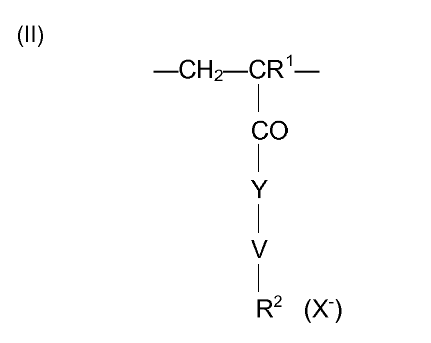 worin
R¹ gleich oder verschieden ist und für Wasserstoff und/oder einen Methylrest steht, 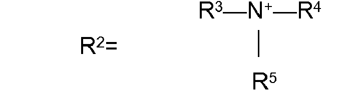 R³, R⁴ und R⁵ jeweils gleich oder verschieden sind und unabhängig voneinander jeweils durch Wasserstoff, einen aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen oder Polyethylenglykol (PEG), repräsentiert werden,
Y gleich oder verschieden ist und durch Sauerstoff, -NH und/oder -NR³, repräsentiert wird,
V gleich oder verschieden ist und durch -(CH₂)ₓ-, 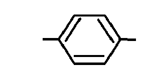 , und/oder 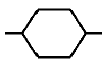 , repräsentiert wird, mit
x gleich oder verschieden ist und durch eine ganze Zahl von 1 bis 6 repräsentiert wird,
X gleich oder verschieden ist und durch ein Halogenatom, C₁- bis C₄-Alkylsulfat und/oder C₁- bis C₄-Alkylsulfonat, repräsentiert wird.

2. Copolymer nach Anspruch 1, **dadurch gekennzeichnet, dass** die Struktureinheit (A) das Polymerisationsprodukt ausgewählt aus der Reihe mindestens einer Monomerspezies [2-(Acryloyloxy)-ethyl]-trimethyl- ammoniumchlorid, [2-(Acryloylamino)-ethyl]-trimethyl-ammoniumchlorid, [2-(Acryloyloxy)-ethyl]-trimethyl-ammoniummethosulfat, [2-(Methacryloyloxy)-ethyl]-trimethylammoniumchlorid bzw. -methosulfat, [3-(Acryloylamino)-propyl]-trimethylammoniumchlorid, [3-(Methacryloylamino)-propyl]-trimethylammoniumchlorid und/oder Diallyldimethylammoniumchlorid (DADMAC) darstellt.

3. Copolymer nach einem der Ansprüche 1 oder 2, **dadurch gekennzeichnet, dass** die makromonomere Struktureinheit (B) durch die allgemeinen Formeln (IIIa) und/oder (IIIb) im Polymer repräsentiert ist: 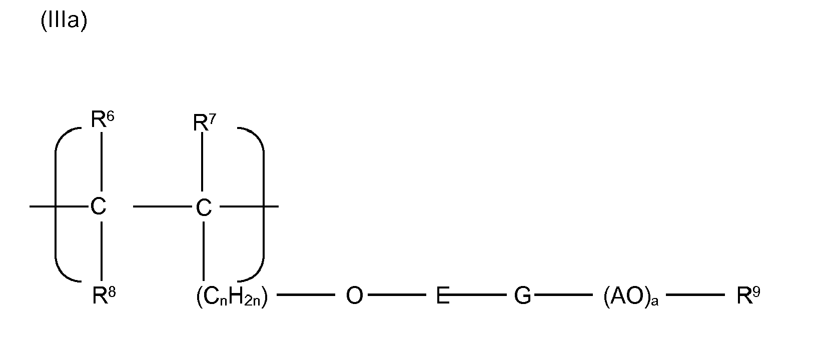 mit
R⁶, R⁷ sowie R⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 5 bis 350 (bevorzugt 10 - 200);
R⁹ gleich oder verschieden sowie repräsentiert durch H, eine unverzweigte oder verzweigte C₁ - C₄ Alkylgruppe, CO-NH₂, und/oder COCH₃; 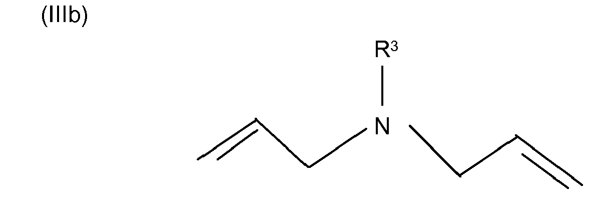 wobei R³ die vorstehend genannte Bedeutung besitzt, und im Falle PEG dieses 5 bis 350, bevorzugt 10 bis 200 Ethylenoxydeinheiten aufweist.

4. Copolymer nach einem der Ansprüche 1 bis 3, **dadurch gekennzeichnet, dass** die Struktureinheit (B) durch die allgemeine Formel (IV) repräsentiert wird: 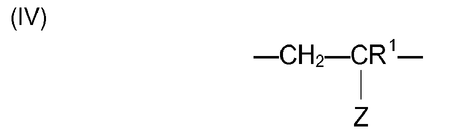 worin
Z gleich oder verschieden ist und -COO(CₘH₂ₘO)ₙ-R¹⁰ bedeutet, mit
R¹⁰ gleich oder verschieden ist und für H und/oder C₁- bis C₄-Alkyl steht, wobei
R¹ die vorstehend genannte Bedeutung besitzt, und
m = 2, 3, 4 oder 5, bevorzugt 2,
n = 0 bis 350 bevorzugt 10 bis 200.

5. Copolymer nach einem der Ansprüche 1 bis 4, **dadurch gekennzeichnet, dass** die Struktureinheit (B) mindestens einen Vertreter einer Monomerspezies ausgewählt aus der Reihe Allylpolyethylenglykol-, Methylpolyethylenglykol-monovinylether, Isoprenylpolyethylenglycol, Polyethylenglykol-vinyloxy-butylether, Polyethylenglykol-block-propylenglykol-vinyloxy-butylether, Methylpolyethylenglykol-block-propylenglykolallylether, Polyethylenglykol--methacrylat und/oder Methylpolyethylenglykol-block-propylenglykolallylether darstellt.

6. Copolymer nach einem der Ansprüche 1 bis 5, **dadurch gekennzeichnet, dass** die Struktureinheit (C) aus dem Polymerisationsprodukt mindestens einer Monomerspezies ausgewählt aus Vertretern mit den folgenden allgemeinen Formeln (Va) und/oder (Vb) und/oder (Vc): 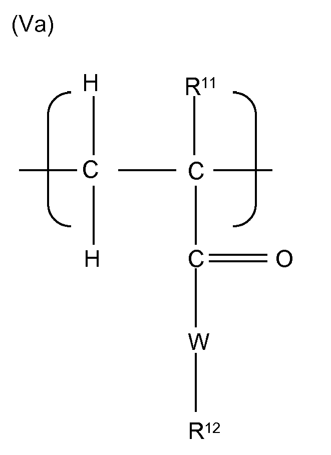 mit
mit R¹¹ gleich oder verschieden sowie repräsentiert durch H und/oder eine unverzweigte oder verzweigte C₁ - C₄ Gruppe;
W gleich oder verschieden sowie repräsentiert durch O und/oder NH;
R¹² gleich oder verschieden sowie repräsentiert durch eine verzweigte oder unverzweigte C₁ - C₅-Monohydroxyalkylgruppe; 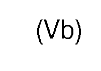 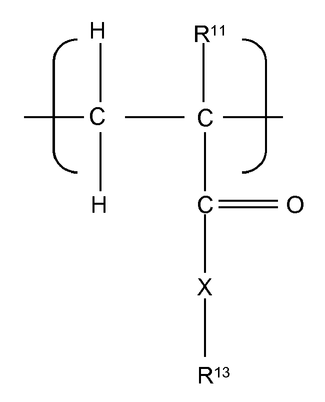 mit
R¹¹ mit den genannten Bedeutungen
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R¹³ gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R¹³ durch OH repräsentiert wird; 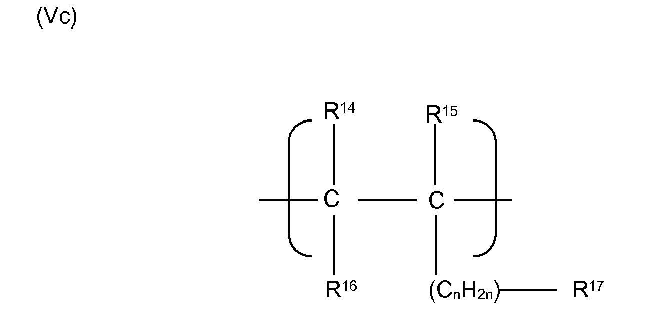 mit
R¹⁴, R¹⁵ und R¹⁶ jeweils gleich oder verschieden sowie jeweils unabhängig repräsentiert durch H und/oder eine unverzweigte oder verzweigte C₁ - C₄ Alkylgruppe;
n gleich oder verschieden sowie repräsentiert durch 0, 1, 2, 3 und/oder 4;
R¹⁷ gleich oder verschieden sowie repräsentiert durch (C₆H₅), OH und/oder -COCH₃.

7. Copolymer nach einem der Ansprüche 1 bis 6, **dadurch gekennzeichnet, dass** es zusätzlich eine Struktureinheit (D) enthält, die durch die folgende allgemeine Formel (VI) repräsentiert wird: 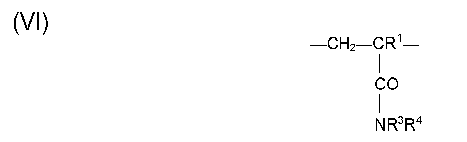 worin
R¹, R³ und R⁴ jeweils die vorstehend genannten Bedeutungen haben,
oder Diallylamin-Polyethylenglykol bedeutet.

8. Copolymer nach einem der Ansprüche 1 bis 7, **dadurch gekennzeichnet, dass** die Struktureinheit (D) mindestens einen Vertreter einer Monomerspezies ausgewählt aus der Reihe Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid und/oder N-tertiär Butylacrylamid darstellt.

9. Copolymer nach einem der Ansprüche 1 bis 8, **dadurch gekennzeichnet, dass** die Struktureinheit (D) durch die folgende allgemeine Formel (VII) repräsentiert wird: 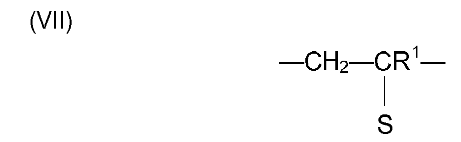 worin
S gleich oder verschieden ist und durch -COOMₖ repräsentiert wird, wobei R¹ die vorstehend genannte Bedeutung besitzt, und M ein Kation der Reihe Wassterstoff, Alkali-, Erdalkali-, Erdalkaliion, mit k = Wertigkeit.

10. Copolymer nach einem der Ansprüche 1 bis 9, **dadurch gekennzeichnet, dass** die Struktureinheit (D) mindestens einen Vertreter einer Monomerspezies ausgewählt aus der Reihe Acrylsäure, Natriumacrylat, Methacrylsäure und/oder Natriummethacrylat darstellt.

11. Copolymer nach einem der Ansprüche 1 bis 10, **dadurch gekennzeichnet, dass** es zusätzlich bis zu 40 Mol-%, bevorzugt 0,1 bis 30 Mol-%, einer Struktureinheit (E) enthält, welche durch die allgemeine Formel (VIII) repräsentiert wird: 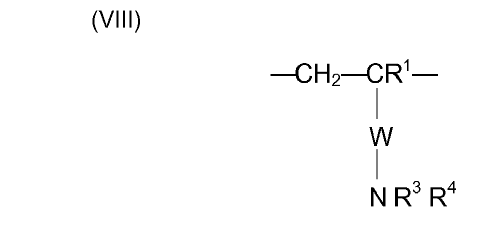 worin
W gleich oder verschieden ist und durch -CO-O-(CH₂)ₓ repräsentiert wird, sowie
R¹, R³, R⁴ jeweils die vorstehend genannten Bedeutungen haben, und
x = eine ganze Zahl von 1 bis 6, bevorzugt 2 oder 3 ist.

12. Copolymer nach Anspruch 11, **dadurch gekennzeichnet, dass** die zusätzliche Struktureinheit (E) mindestens einen Vertreter einer Monomerspezies ausgewählt aus der Reihe [3-(Methacryloylamino)-propyl]-dimethylamin, [3-(Acryloylamino)-propyl]-dimethylamin, [2-(Methacryloyl-oxy)-ethyl]-dimethylamin, [2-(Acryloyl-oxy)-ethyl]-dimethylamin, [2-(Methacryloyl-oxy)-ethyl]-diethylamin und/oder [2-(Acryloyl-oxy)-ethyl]-diethylamin darstellt.

13. Copolymer nach einem der Ansprüche 1 bis 12, **dadurch gekennzeichnet, dass** es zusätzlich zu den Struktureinheiten (A) und (B) sowie ggf. (C), (D) und (E) eine Struktureinheit (F) der folgenden allgemeinen Formeln (IX) und/oder (X) enthält: 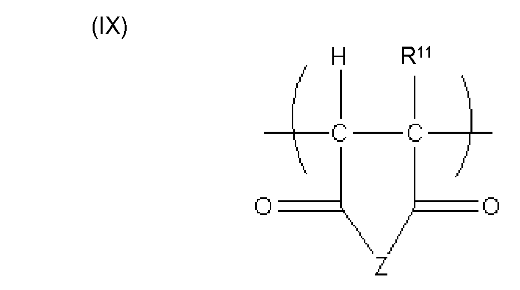 mit
R¹¹ mit den genannten Bedeutungen
Z gleich oder verschieden sowie repräsentiert durch O und/oder NH; 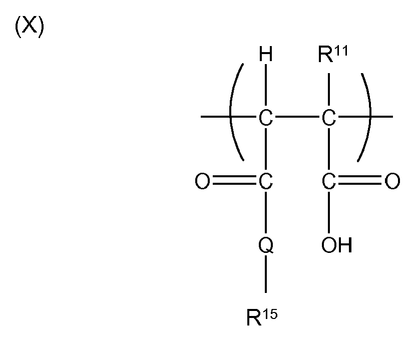 mit
R¹¹ mit den genannten Bedeutungen
Q = O oder NH
R¹⁵ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂m)ₑ-O-(A'O)_{α}-R¹⁶ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α= eine ganze Zahl von 1 bis 350 mit R¹⁶ gleich oder verschieden sowie repräsentiert durch eine unverzweigte oder verzweigte C₁ - C₄ Alkylgruppe.

14. Verwendung des Copolymers nach einem der Ansprüche 1 bis 13 als Zusatzmittel für wässrige Baustoffsysteme, die anorganische Bindemittel enthalten, insbesondere Calciumsulfat-basierte Bindemittel, vorzugsweise Calciumsulfat-Halbhydrat, Gips oder Anhydrit, und Kalk.

15. Verwendung nach Anspruch 14 zur Maskierung von Tonbestandteilen und/oder zur Dispergierung.

16. Verwendung nach einem der Ansprüche 14 oder 15 bei der Herstellung Calciumsulfat-haltiger Suspensionen.

17. Verwendung nach einem der Ansprüche 14 bis 16 in Trockenmörtelmischungen, Putzsystemen sowie bei der Herstellung von plattenförmigen Elementen, insbesondere von Gipskartonplatten, von Spachtelmassen und sogenannten Underlayments.

18. Verwendung nach einem der Ansprüche 14 bis 17 in Kombination mit mindestens einem anderen Dispergiermittel vom Typ Polycarboxylatether, Polycarboxylatester, phosphorhaltige Polykondensationsprodukte, Naphthalinsulfonat-Formaldehyd-Kondensationsprodukte ("BNS") und Melaminsulfonat-Formaldehyd-Kondensationsprodukte ("MSF").

19. Formulierung enthaltend das Copolymer nach einem der Ansprüche 1 bis 13 sowie ggf. einen Abbindeverzögerer für Calciumsulfatbasierende Baustoffsysteme ausgewählt aus der Reihe der Chelatisierungsmittel, d.h. Komplexbildner wie Ethylendiamintetraacetat, Diethylentriaminpentacetat, Phosphate, Phosphonate oder Zucker, Weinsäure, Bernsteinsäure, Zitronensäure, Gluconate, Maleinsäuren, Polyacrylsäuren und deren Salze sowie Retardan oder Mischungen davon, in bevorzugten Anteilen an der Formulierung von maximal10 Gew.-%, bezogen auf deren Feststoffanteil, und insbesondere zwischen 2,0 und 8,0 Gew.-%, besonders bevorzugt von 4,0 bis 6,5 Gew.-%.
